# EUROPEAN PATENT APPLICATION

(11) **EP 4 832 195 A1**
(43) Date of publication of application: **28.10.2026**
(21) Application number: 24928231.0
(22) Date of filing: 23.12.2024
(51) Int. Cl.: H01M 50/224, H01M 10/613, H01M 10/6556

(54) **BOX BODY, BATTERY AND ELECTRICAL DEVICE**

(30) Priority: 06.03.2024 CN 202410256668
(71) Applicant: Contemporary Amperex Technology Co., Limited, Ningde, Fujian 352100 (CN)
(72) Inventor: ZHANG, Daowei, Ningde, Fujian 352100 (CN); HUANG, Le, Ningde, Fujian 352100 (CN); GUO, Xinfei, Ningde, Fujian 352100 (CN); YU, Qian, Ningde, Fujian 352100 (CN); ZHANG, Wei, Ningde, Fujian 352100 (CN)
(74) Representative: Lorenz Seidler Gossel Part. mbB
(86) International application number: PCT/CN2024/141599
(87) International publication number: WO 2025/185302

(57) **Abstract**

The present application is suitable for the technical field of power batteries, and provides a box body (400), a battery (200) and an electrical device (100). The box body comprises: a lower box body (40), which comprises a box body steel layer and a box body aluminum layer, and a temperature control assembly (50), which is connected to the lower box body, the temperature control assembly comprising a temperature control aluminum layer, and the temperature control aluminum layer being welded to the box body aluminum layer. The box body of the present application enables the material of the side of the temperature control assembly connected to the lower box body to be same as the material of the side of the lower box body connected to the temperature control assembly, so that the temperature control assembly can be connected to the lower box body more stably, thus reducing the difficulty of connecting the temperature control assembly to the lower box body.

## Description

This application claims priority to the Chinese patent application filed with the China National Intellectual Property Administration on March 6, 2024, with application No. 202410256668.6 and entitled "BOX BODY, BATTERY, AND ELECTRICAL DEVICE", which is incorporated herein by reference in its entirety.

### TECHNICAL FIELD

This application relates to the technical field of power batteries, and particularly relates to a box body, a battery, and an electrical device.

### BACKGROUND

Energy saving and emission reduction are the keys to the sustainable development of the automotive industry, and electric vehicles have become an important part of the sustainable development of the automotive industry due to their advantages of energy saving and environmental protection. For electric vehicles, battery technology is an important factor related to their development.

During the use of batteries, temperature rise is prone to occur, so a cooling plate is usually required to be provided in the battery to control the temperature of the battery. Currently, the cooling plate is usually fixed to the box body of the battery through structural members or a large number of bolts, and this installation method is cumbersome in operation and liable to increase the overall weight of the battery.

### SUMMARY

In view of the above problems, this application provides a box body, a battery, and an electrical device, which alleviates the problems that the fixing process of the cooling plate is cumbersome and liable to increase the overall weight of the battery.

According to a first aspect, embodiments of this application provide a box body for accommodating a battery cell, the box body including:
a lower box body, the lower box body including a box body steel layer and a box body aluminum layer; and
a temperature control assembly connected to the lower box body, the temperature control assembly including a temperature control aluminum layer, and the temperature control aluminum layer being welded to the box body aluminum layer.

In the technical solution of this embodiment, the temperature control aluminum layer of the temperature control assembly is connected to the box body aluminum layer of the lower box body, so that the material at the connection part between the temperature control assembly and the lower box body may be uniform or substantially uniform, thereby enabling the temperature control assembly to be more stably connected to the lower box body, and also reducing the difficulty of connecting the temperature control assembly to the lower box body; the lower box body includes the box body steel layer, so that the lower box body has high strength, thereby enhancing the load-bearing capacity of the lower box body and facilitating the lower box body to better protect structures such as battery cells inside it; and the temperature control assembly includes the temperature control aluminum layer, so as to reduce the weight of the temperature control assembly and also improve the heat exchange performance of the temperature control assembly.

In some embodiments, the lower box body includes a bottom plate and an accommodating cavity formed on a side of the bottom plate, the bottom plate includes a bottom plate steel layer and a bottom plate aluminum layer, and the bottom plate aluminum layer covers at least part of the bottom plate steel layer; and
the box body steel layer includes the bottom plate steel layer, the box body aluminum layer includes the bottom plate aluminum layer, and the temperature control aluminum layer is welded to the bottom plate aluminum layer.

The technical solution of this embodiment provides some specific structures of the lower box body, so that the lower box body includes the bottom plate and forms the accommodating cavity on one side of the bottom plate to accommodate battery cells; the bottom plate includes the bottom plate steel layer, so that the bottom plate has high strength, thereby enhancing the load-bearing capacity of the bottom plate; and the bottom plate includes the bottom plate aluminum layer, so as to facilitate the connection of the temperature control assembly to the bottom plate.

In some embodiments, the temperature control assembly includes a flow channel connected to the bottom plate aluminum layer, and a flow channel is formed inside the flow channel tube.

The technical solution of this embodiment provides some specific structures of the temperature control assembly, so that the temperature control assembly includes the flow channel tube and is connected to the bottom plate, and the flow channel is formed inside the flow channel tube, so as to facilitate flow of a heat exchange medium in the flow channel of the temperature control assembly.

In some embodiments, the bottom plate aluminum layer is disposed on a side of the bottom plate steel layer facing the accommodating cavity, the bottom plate is recessed with a first groove in a direction away from the accommodating cavity, and at least part of the flow channel tube is accommodated in the first groove.

In the technical solution of this embodiment, the flow channel tube is disposed in the accommodating cavity, so as to facilitate better heat exchange between the flow channel tube and the accommodating cavity; and the first groove is disposed on the bottom plate, and at least part of the flow channel tube is accommodated in the first groove, so as to reduce the occupation of the space of the accommodating cavity by the flow channel tube.

In some embodiments, a surface of the flow channel tube facing the accommodating cavity is flush with a surface of the bottom plate facing the accommodating cavity.

In the technical solution of this embodiment, the surface of the flow channel tube facing the accommodating cavity is the surface of the flow channel tube facing the inside of the box body, and the surface of the bottom plate facing the accommodating cavity is the surface of the bottom plate facing the inside of the box body, so that the surface of the flow channel tube facing the accommodating cavity being flush with the surface of the bottom plate facing the accommodating cavity can further reduce the occupation of the internal space of the box body by the flow channel tube, and also facilitate the bottom plate to bear battery cells and facilitate the arrangement of battery cells on the bottom plate.

In some embodiments, the bottom plate aluminum layer is disposed on a side of the bottom plate steel layer away from the accommodating cavity.

The technical solution of this embodiment provides some other specific structures of the bottom plate. The bottom plate aluminum layer is disposed on a side of the bottom plate steel layer away from the accommodating cavity, so that the temperature control assembly is located outside the accommodating cavity, thereby reducing the occupation of the internal space of the box body by the temperature control assembly.

In some embodiments, the flow channel tube includes a structural aluminum layer, the temperature control aluminum layer includes the structural aluminum layer, and the structural aluminum layer is connected through brazing to the bottom plate aluminum layer.

The technical solution of this embodiment provides some connection modes between the structural aluminum layer and the bottom plate aluminum layer, and the structural aluminum layer is connected through brazing to the bottom plate aluminum layer, thereby enabling the connection between the structural aluminum layer and the bottom plate aluminum layer to have high connection strength and good sealing performance, while saving structures such as fasteners, reducing the overall weight of the box body, and also reducing the connection difficulty and simplifying the connection process.

In some embodiments, the lower box body further includes a side beam, and the bottom plate is connected to the side beam and encloses the accommodating cavity with the side beam.

The technical solution of this embodiment provides some specific structures of the lower box body. The lower box body includes the side beam, and the bottom plate is connected to the side beam, so that the bottom plate can enclose the accommodating cavity for accommodating a battery cell with the side beam, and the arrangement of the side beam can further increase the strength of the lower box body.

In some embodiments, the side beam includes a side beam steel layer, and the side beam steel layer is connected to the bottom plate steel layer.

The technical solution of this embodiment provides some specific structures of the side beam. The side beam includes the side beam steel layer, thereby enabling the bottom plate to be connected to the side beam steel layer through the bottom plate steel layer, so that the bottom plate can be more stably connected to the side beam.

In some embodiments, the bottom plate steel layer includes a main body portion and an edge portion disposed on a peripheral side of the main body portion, the bottom plate aluminum layer covers at least part of the main body portion and exposes the edge portion, and the edge portion is connected to the side beam steel layer.

Since the bottom plate includes the bottom plate steel layer and the bottom plate aluminum layer, the technical solution of this embodiment provides some specific structures for connecting the bottom plate steel layer to the side beam steel layer, the bottom plate steel layer includes the main body portion and the edge portion disposed on the peripheral side of the main body portion, and the bottom plate aluminum layer covers only the main body portion to expose the edge portion, so as to facilitate connection of the bottom plate steel layer to the side beam steel layer at the edge portion; and since the melting point of aluminum is lower than that of steel, setting the area of the bottom plate aluminum layer smaller than the area of the bottom plate steel layer and exposing the edge portion can reduce damage to the bottom plate aluminum layer when the bottom plate steel layer is connected to the side beam steel layer, and also reduce the negative impact of the bottom plate aluminum layer on the connection between the bottom plate steel layer and the side beam steel layer.

In some embodiments, the bottom plate steel layer includes a main body portion and an edge portion disposed on a peripheral side of the main body portion, the edge portion is bent relative to the main body portion in a direction in which the bottom plate aluminum layer is located, and a side of the edge portion away from the bottom plate aluminum layer is connected to the side beam steel layer.

Since the bottom plate includes the bottom plate steel layer and the bottom plate aluminum layer, the technical solution of this embodiment provides some other specific structures for connecting the bottom plate steel layer to the side beam steel layer, so that the bottom plate steel layer includes the main body portion and the edge portion disposed on the peripheral side of the main body portion, and the edge portion may be bent and cover part of the main body portion, and the bent edge portion may also be opposite to the side beam and connected to the side beam, so that the bottom plate steel layer can be connected to the side beam steel layer. Meanwhile, the bent edge portion may also make part of the bottom plate aluminum layer near the edge portion located on a side of the bottom plate steel layer away from the side beam, so as to reduce the negative impact of the bottom plate aluminum layer on the connection between the bottom plate steel layer and the side beam steel layer, and also play a role in protecting the bottom plate aluminum layer.

In some embodiments, the edge portion is perpendicular to the main body portion, or the edge portion is folded onto the main body portion.

The technical solution of this embodiment provides multiple bending manners of the edge portion, so that the edge portion can be perpendicular to the main body portion and connected to the side beam, or folded onto the main body portion and connected to the side beam, so as to facilitate workers to select the bending manner according to actual working conditions, thus expanding the adaptation range of the box body structure.

In some embodiments, the side beam further includes a side beam aluminum layer at least covering part of the side beam steel layer.

The technical solution of this embodiment provides some other structures of the side beam, so that the side beam further includes the side beam aluminum layer at least covering part of the side beam steel layer, so as to further enhance the strength of the side beam, and facilitate connection of the side beam to aluminum materials of the temperature control assembly or other structures, and the side beam aluminum layer can also reduce corrosion of the side beam steel layer by the external environment.

In some embodiments, the edge portion is welded to the side beam steel layer.

The technical solution of this embodiment provides some connection modes between the edge portion and the side beam steel layer, so that the edge portion is welded to the side beam steel layer, thereby enabling the connection between the edge portion and the side beam steel layer to have high connection strength and good sealing performance, while saving structures such as fasteners, reducing the overall weight of the box body, and also reducing the connection difficulty and simplifying the connection process.

In some embodiments, the lower box body further includes a reinforcing beam, where the reinforcing beam is accommodated in the accommodating cavity, and the reinforcing beam is a steel beam; and
the bottom plate steel layer is connected to the reinforcing beam.

In the technical solution of this embodiment, the lower box body includes the reinforcing beam, and the reinforcing beam can improve the strength of the lower box body and suppress the expansion of the lower box body; connecting the bottom plate steel layer to the reinforcing beam can enhance the stability of the connection, and also facilitate flexible selection of different connection modes such as welding and screwing.

In some embodiments, a thickness of the bottom plate steel layer is greater than a thickness of the bottom plate aluminum layer.

In the technical solution of this embodiment, the thickness of the bottom plate steel layer is greater than the thickness of the bottom plate aluminum layer. Since the main function of the bottom plate steel layer is to enhance the strength of the bottom plate, the bottom plate steel layer is made thicker to better enhance the strength of the bottom plate; and since the main function of the bottom plate aluminum layer is to facilitate connection of the flow channel tube, the bottom plate aluminum layer is made thinner, so that the bottom plate aluminum layer can be connected to the flow channel tube and also reduce the space occupation of the bottom plate aluminum layer, thereby reducing the overall thickness of the bottom plate.

In some embodiments, the thickness of the bottom plate steel layer ranges from 0.5 mm to 2.0 mm, and the thickness of the bottom plate aluminum layer ranges from 0.05 mm to 1.0 mm.

The technical solution of this embodiment provides some thickness ranges of the bottom plate steel layer and the bottom plate aluminum layer, so that the thickness of the bottom plate steel layer can be greater than the thickness of the bottom plate aluminum layer, thereby enhancing the strength of the temperature control assembly. Meanwhile, the bottom plate aluminum layer can be connected to the flow channel tube and also reduce the space occupation of the bottom plate aluminum layer, thus reducing the overall thickness of the bottom plate.

In some embodiments, a through hole is provided in the bottom plate, and the temperature control assembly covers the through hole.

The technical solution of this embodiment provides some other specific structures of the lower box body. A through hole is provided in the bottom plate, and the temperature control assembly covers the through hole, which can not only enable the temperature control assembly to better perform heat exchange with the accommodating cavity, but also accommodate part of the temperature control assembly through the through hole, so as to reduce the occupation of the space of the accommodating cavity by the temperature control assembly.

In some embodiments, the bottom plate aluminum layer is disposed on a side of the bottom plate steel layer facing the accommodating cavity, and the temperature control assembly is disposed on a side of the bottom plate facing the accommodating cavity.

In the technical solution of this embodiment, the bottom plate aluminum layer is disposed on a side of the bottom plate steel layer facing the accommodating cavity, so that the temperature control assembly can be disposed in the accommodating cavity, so as to reduce the height of the temperature control assembly protruding from the bottom plate, thereby reducing the demand of the temperature control assembly for external space, and also playing a role in protecting part of the temperature control assembly.

In some embodiments, the lower box body includes a side beam, and the side beam includes a side beam steel layer and a side beam aluminum layer at least covering part of the side beam steel layer; and
the box body steel layer includes the side beam steel layer, the box body aluminum layer includes the side beam aluminum layer, and the temperature control aluminum layer is welded to the side beam aluminum layer.

The technical solution of this embodiment provides some other specific structures of the lower box body, so that the lower box body includes the side beam, and the temperature control assembly is connected to the side beam, so that the temperature control assembly can enclose the accommodating cavity for accommodating a battery cell with the side beam. In this way, the temperature control assembly serves as the bottom structure of the lower box body and replaces the bottom plate, so that the box body does not need to accommodate the temperature control assembly, reducing the volume required by the box body, thereby reducing the volume of the box body, reducing the space occupied by the box body, improving the integration degree of the box body, and also reducing the overall weight of the box body.

In some embodiments, the temperature control assembly includes a first plate body and a second plate body, where a flow channel is formed between the first plate body and the second plate body, the first plate body includes a first aluminum layer, the second plate body includes a second aluminum layer, and the first aluminum layer is connected to the second aluminum layer; and
the temperature control aluminum layer includes the first aluminum layer or the second aluminum layer, and the first aluminum layer or the second aluminum layer is welded to the side beam aluminum layer.

The technical solution of this embodiment provides some specific structures of the temperature control assembly. The temperature control assembly includes the first plate body and the second plate body, and the first plate body is connected to the second plate body, so that the flow channel can be formed between the first plate body and the second plate body. The first plate body includes the first aluminum layer, and the second plate body includes the second aluminum layer, so as to facilitate connection of the first plate body to the second plate body, and also facilitate connection of the first aluminum layer or the second aluminum layer to the side beam aluminum layer.

In some embodiments, the first plate body is recessed with a second groove in a direction away from the side beam, and the second plate body is disposed on a side of the first plate body facing the side beam and covers the second groove.

The technical solution of this embodiment provides some specific structures of the temperature control assembly. The second groove is formed on the first plate body, and the second plate body covers the second groove, so that the second plate body can cooperate with the second groove to enclose the flow channel, thereby facilitating the flow of the heat exchange medium in the flow channel.

In some embodiments, a surface of the second plate body away from the first plate body is a flat surface.

In the technical solution of this embodiment, the surface of the second plate body away from the first plate body is the surface of the second plate body facing the inside of the box body. Configuring this surface as a flat surface can reduce the occupation of the internal space of the box body by the second plate body, and also facilitate the arrangement of structures such as battery cells in the box body.

In some embodiments, the first plate body further includes a first steel layer, where the first steel layer is disposed on a side of the first aluminum layer away from the second aluminum layer; and/or
the second plate body further includes a second steel layer, where the second steel layer is disposed on a side of the second aluminum layer away from the first aluminum layer.

The technical solution of this embodiment provides some specific structures of the first plate body and the second plate body. The first plate body further includes the first steel layer, so as to enhance the strength of the first plate body, enhance the strength of the temperature control assembly, and thus enables the temperature control assembly to better support the battery cells; and the second plate body further includes the second steel layer, so as to enhance the strength of the second plate body, enhance the strength of the temperature control assembly, and thus enables the temperature control assembly to better support the battery cells.

According to a second aspect, some embodiments of this application further provide a battery, including the box body according to some embodiments of the first aspect.

According to a third aspect, some embodiments of this application further provide an electrical device, including the battery according to some embodiments of the second aspect.

The above description is merely an overview of the technical solutions of this application. In order to more clearly understand the technical means of this application and implement them in accordance with the contents of the specification, and to make the above and other purposes, features, and advantages of this application more obvious and easier to understand, the specific implementation manners of this application are specifically illustrated below.

### BRIEF DESCRIPTION OF DRAWINGS

By reading the detailed description of the preferred embodiments below, various other advantages and benefits will become clear to those of ordinary skill in the art. The accompanying drawings are only for the purpose of illustrating the preferred embodiments and are not considered as limiting this application. Moreover, the same reference numerals represent the same components in all the drawings. In the drawings:
FIG. 1 is a schematic structural diagram of an electrical device according to some embodiments of this application.
FIG. 2 is an exploded schematic diagram of a battery according to some embodiments of this application.
FIG. 3 is an exploded schematic diagram of a battery cell according to some embodiments of this application.
FIG. 4 is a perspective schematic diagram of a lower box body according to some embodiments of this application.
FIG. 5 is a top view schematic diagram of a lower box body according to some embodiments of this application.
FIG. 6 is a cross-sectional schematic diagram at A-A in FIG. 5 according to some embodiments of this application.
FIG. 7 is a partial enlarged schematic diagram at B in FIG. 6 according to some embodiments of this application.
FIG. 8 is a partial enlarged schematic diagram at B in FIG. 6 according to some other embodiments of this application.
FIG. 9 is a partial enlarged schematic diagram at C in FIG. 6 according to some embodiments of this application.
FIG. 10 is a partial enlarged schematic diagram at D in FIG. 9 according to some embodiments of this application.
FIG. 11 is a partial enlarged schematic diagram at D in FIG. 9 according to some other embodiments of this application.
FIG. 12 is a partial enlarged schematic diagram at D in FIG. 9 according to some other embodiments of this application.
FIG. 13 is a partial enlarged schematic diagram at D in FIG. 9 according to some other embodiments of this application.
FIG. 14 is a partial enlarged schematic diagram at E in FIG. 10 according to some embodiments of this application.
FIG. 15 is a partial enlarged schematic diagram at C in FIG. 6 according to some other embodiments of this application.
FIG. 16 is a partial enlarged schematic diagram at F in FIG. 15 according to some other embodiments of this application.
FIG. 17 is a partial enlarged schematic diagram at F in FIG. 15 according to some other embodiments of this application.
FIG. 18 is a perspective schematic diagram of a lower box body according to some other embodiments of this application.
FIG. 19 is a top view schematic diagram of a lower box body according to some other embodiments of this application.
FIG. 20 is a partial cross-sectional schematic diagram at G-G in FIG. 19 according to some embodiments of this application.

The meanings of the reference signs in the drawings are:
100, electrical device;
10, motor;
20, controller;
200, battery;
300, battery cell;
31, end cover; 32, case; 33, electrode assembly;
400, box body;
40, lower box body; 401, accommodating cavity; 41, side beam; 411, side beam steel layer; 412, side beam aluminum layer; 42, bottom plate; 421, bottom plate steel layer; 4211, main body portion; 4212, edge portion; 422, bottom plate aluminum layer; 423, first groove; 424, through hole;
50, temperature control assembly; 51, flow channel tube; 52, first plate body; 521, first steel layer; 522, first aluminum layer; 523, second groove; 53, second plate body; 531, second aluminum layer; 532, second steel layer;
60, reinforcing beam; and
70, upper box body.

### DESCRIPTION OF EMBODIMENTS

The embodiments of the technical solutions of this application will be described in detail below with reference to the accompanying drawings. The following embodiments are only used to more clearly illustrate the technical solutions of this application, and thus are merely illustrative and shall not be construed to limit the protection scope of this application.

Unless otherwise defined, all technical and scientific terms used herein have the same meanings as commonly understood by those of ordinary skill in the technical field to which this application belongs; the terms used herein are only for the purpose of describing specific embodiments and are not intended to limit this application; the terms "include" and "have" and any variations thereof in the specification and claims of this application and the above description of the drawings are intended to cover non-exclusive inclusions.

In the description of the embodiments of this application, the technical terms "first", "second" and the like are only used to distinguish different objects and shall not be understood as indicating or implying relative importance or implicitly indicating the number, specific order or primary and secondary relationship of the indicated technical features. In the description of the embodiments of this application, the meaning of "plurality" is two or more unless otherwise clearly and specifically defined.

The reference to "an embodiment" herein means that a particular feature, structure, or characteristic described in combination with the embodiment may be included in at least one embodiment of this application. The appearance of the phrase at various places in the specification does not necessarily refer to the same embodiment, nor is it an independent or alternative embodiment that is mutually exclusive with other embodiments. Those of ordinary skill in the art will understand, both explicitly and implicitly, that the embodiments described herein may be combined with other embodiments.

In the description of the embodiments of this application, the term "and/or" is merely an association describing associated objects, indicating that three relationships can exist, for example, A and/or B can indicate: A exists alone, A and B exist simultaneously, and B exists alone. In addition, the character "/" in this document generally indicates that the preceding and following associated objects are in an "or" relationship.

In the description of the embodiments of this application, the technical term "plurality" refers to two or more (including two), similarly, "plurality of groups" refers to two or more groups (including two groups), and "plurality of pieces" refers to two or more pieces (including two pieces).

In the description of the embodiments of this application, the orientation or positional relationship indicated by the technical terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential" and the like is based on the orientation or positional relationship shown in the accompanying drawings, and is only for facilitating the description of the embodiments of this application and simplifying the description, rather than indicating or implying that the referred device or element must have a specific orientation, be constructed and operated in a specific orientation, and therefore shall not be understood as limiting the embodiments of this application.

In the description of the embodiments of this application, unless otherwise clearly specified and limited, the technical terms "mounting", "connection", "coupling", "attachment" and the like should be understood in a broad sense, for example, it may be a fixed connection, a detachable connection, or an integral formation; it may also be a mechanical connection or an electrical connection; it may be directly connected or indirectly connected through an intermediate medium, and it may be the internal communication or interaction relationship between two elements. For those of ordinary skill in the art, the specific meanings of the above terms in the embodiments of this application may be understood according to specific circumstances.

At present, from the development of the market situation, the application of power batteries is becoming more and more widespread. Power batteries are not only applied to energy storage power systems such as hydraulic, thermal, wind and solar power stations, but also widely applied to electric bicycles, electric motorcycles, electric vehicles and other electric vehicles, as well as military equipment and aerospace and other fields. With the continuous expansion of the application fields of power batteries, the market demand therefor is also continuously increasing.

In the battery, the box body is an important component, and the box body is configured to accommodate battery cells, temperature control assemblies (such as water cooling plates), control devices, and other structures and components, and to provide protection for the structures and components accommodated therein.

The temperature control assembly is also an important component in the battery, and the temperature control assembly is mainly used to control the temperature of the battery. Since the battery is prone to temperature rise during use, excessively high temperature of the battery may easily lead to thermal runaway, thus posing a risk of fire or even explosion; and the arrangement of the temperature control assembly can alleviate the situation of excessive battery temperature, reduce the risk of battery fire, and improve the safety performance of the battery.

Currently, the temperature control assembly is usually disposed in the box body and installed on the box body through structural parts or a large number of bolts. Meanwhile, a sealing structure (such as a sealing ring) needs to be provided between the temperature control assembly and the box body. This installation method is cumbersome, has low installation efficiency, and is liable to increase the overall weight of the battery.

In order to simplify the installation process of the temperature control assembly and reduce the overall weight of the battery, the temperature control assembly may be fixed to the box body by welding, gluing and other methods to save structures such as structural parts or bolts. However, the materials of the temperature control assembly and the box body are different. Since the main function of the temperature control assembly is heat exchange for temperature control, and the weight of the temperature control assembly should not be excessively heavy to reduce the overall weight of the battery, the material of the temperature control assembly is usually a lightweight material such as aluminum; in addition, since the main function of the box body is to bear structures such as battery cells and provide protection for them, the material of the box body is usually a structural material such as steel. After the temperature control assembly and the box body of different materials are connected, when the external environment changes (such as heating and cooling), the deformation of different materials varies, which easily leads to gaps at the connection, and sealing members such as sealing rings still need to be provided in this case, the installation process is still cumbersome, and the sealing members will still increase the overall weight of the battery. Meanwhile, the different deformations of different materials will also apply additional force to the connection part of the temperature control assembly and the box body, thereby increasing the load-bearing force at the connection part of the temperature control assembly and the box body, and easily causing deformation, fracture and other situations at the connection part of the temperature control assembly and the box body.

Based on the above considerations, in order to simplify the installation process of the temperature control assembly and reduce the overall weight of the battery, the embodiments of this application design a box body. The box body is configured to be made of a steel-aluminum material, and the temperature control assembly is configured to be made of an aluminum material, so that the connection part between the temperature control assembly and the box body may be of the same material. For example, the box body includes a steel layer and an aluminum layer, and the temperature control assembly includes an aluminum layer, and in this case, the material at the connection between the temperature control assembly and the box body may be aluminum.

In such box body, the connection part between the temperature control assembly and the box body is of the same material. When the external environment changes, the temperature control assembly and the box body can change synchronously at the connection part, thereby reducing the occurrence of gaps, saving sealing members, eliminating the installation process of the sealing members, simplifying the installation process, and reducing the overall weight of the battery. Meanwhile, it can also reduce the occurrence of deformation and fracture at the connection part between the temperature control assembly and the box body, thereby helping to improve the connection strength between the temperature control assembly and the box body.

The box body disclosed in the embodiments of this application may be used for electrical devices using batteries as power sources or various energy storage systems using batteries as energy storage elements. The electrical device may be but is not limited to a mobile phone, a tablet, a notebook computer, an electric toy, an electric tool, a battery car, an electric vehicle, a ship, and a spacecraft. The electric toy may include fixed or mobile electric toys, such as a game console, an electric vehicle toy, an electric ship toy, an electric aircraft toy, and the like, and the spacecraft may include an airplane, a rocket, a space shuttle, a spaceship, and the like.

The following embodiments are described by taking an electrical device 100 according to an embodiment of this application as a vehicle as an example for convenience of explanation.

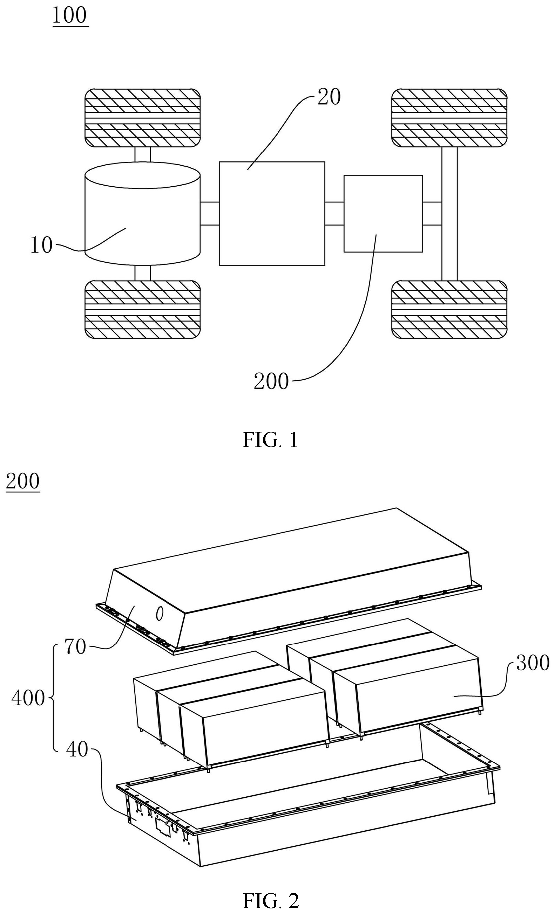

Referring to FIG. 1, FIG. 1 is a schematic structural diagram of a vehicle according to some embodiments of this application. The vehicle may be a fuel vehicle, a gas vehicle, or a new energy vehicle, and the new energy vehicle may be a battery electric vehicle, a hybrid electric vehicle, or a range-extended electric vehicle, or the like. A battery 200 is disposed inside the vehicle, and the battery 200 may be disposed at the bottom, head, or tail of the vehicle. The battery 200 may be used for power supply of the vehicle, for example, the battery 200 may serve as the operating power source of the vehicle. The vehicle may also include a controller 20 and a motor 10, and the controller 20 is configured used to control the battery 200 to supply power to the motor 10, for example, for the power demand for starting, navigation, and running of the vehicle.

In some embodiments of this application, the battery 200 may not only serve as the operating power source of the vehicle, but also as the driving power source of the vehicle, replacing or partially replacing fuel or natural gas to provide driving power for the vehicle.

Referring to FIG. 2, FIG. 2 is an exploded view of a battery 200 according to some embodiments of this application. The battery 200 includes a box body 400 and battery cells 300, and the battery cells 300 are accommodated in the box body 400. The box body 400 is configured to provide an accommodating space for the battery cells 300, and the box body 400 may adopt various structures. In some embodiments, the box body 400 can include an upper box body 70 and a lower box body 40, the upper box body 70 and the lower box body 40 are mutually covered, and the upper box body 70 and the lower box body 40 together define an accommodating space for accommodating the battery cells 300. The lower box body 40 may be a hollow structure with an end open, the upper box body 70 may be a plate-shaped structure, and the upper box body 70 covers the open side of the lower box body 40, so that the upper box body 70 and the lower box body 40 together define the accommodating space. The upper box body 70 and the lower box body 40 may also be hollow structures with one side open, and the open side of the upper box body 70 covers the open side of the lower box body 40. Certainly, the box body 400 formed by the upper box body 70 and the lower box body 40 may have various shapes, such as a cylinder and a cuboid.

In the battery 200, the battery cells 300 may be multiple, and the multiple battery cells 300 may be connected in series, in parallel, or in a hybrid connection. The hybrid connection refers to a connection mode that includes both series and parallel connections among the multiple battery cells 300. The multiple battery cells 300 may be directly connected in series, in parallel, or in a hybrid manner, and then the whole formed by the multiple battery cells 300 is accommodated in the box body 400. Certainly, the battery 200 may also first connect the multiple battery cells 300 in series, in parallel, or in a hybrid connection to form a battery 200 module, and then multiple battery 200 modules are connected in series, in parallel, or in a hybrid connection to form an integral structure, which is then accommodated in the box body 400. The battery 200 may also include other structures, for example, the battery 200 may also include a busbar component for realizing electrical connection between the multiple battery cells 300.

Each battery cell 300 may be a secondary battery or a primary battery; it may alternatively be a lithium-sulfur battery, a sodium-ion battery, or a magnesium-ion battery, but is not limited thereto. The battery cell 300 may be in a cylindrical shape, a flat shape, a cuboid shape, or other shapes.

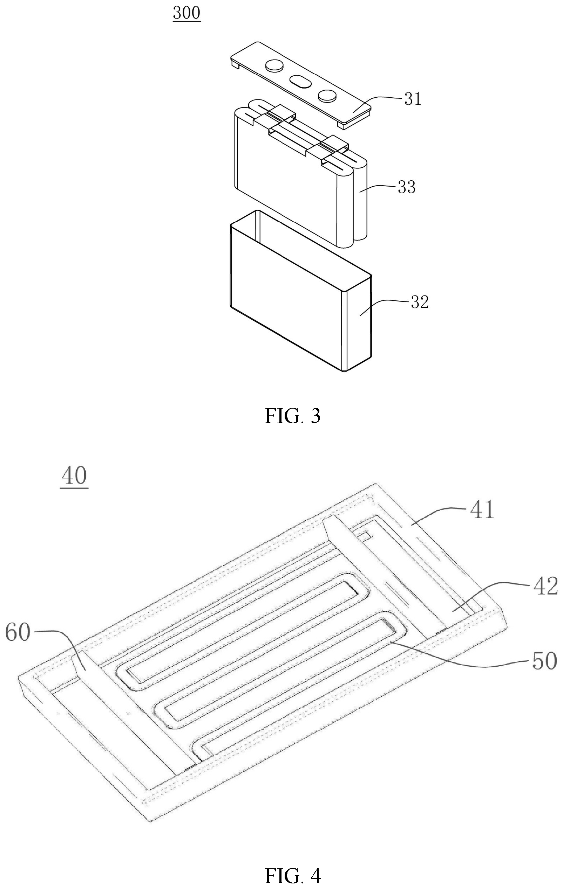

Referring to FIG. 3, FIG. 3 is an exploded structural schematic diagram of a battery cell 300 according to some embodiments of this application. The battery cell 300 refers to the smallest unit constituting the battery 200. As shown, the battery cell 300 includes an end cover 31, a case 32, an electrode assembly 33, and other functional components.

The end cover 31 refers to a component that covers the opening of the case 32 to isolate the internal environment of the battery cell 300 from the external environment. Without limitation, the shape of the end cover 31 may be adapted to the shape of the case 32 to cooperate with the case 32. Optionally, the end cover 31 may be made of a material with a certain hardness and strength (such as aluminum alloy), so that the end cover 31 is not prone to deformation when squeezed or collided, enabling the battery cell 300 to have higher structural strength and also improving safety performance. Functional components such as electrode terminals may be provided on the end cover 31. The electrode terminal may be electrically connected to the electrode assembly 33 for outputting or inputting electrical energy of the battery cell 300. In some embodiments, a pressure relief mechanism may alternatively be disposed on the end cover 31 for releasing internal pressure when the internal pressure or temperature of the battery cell 300 reaches a threshold. The material of the end cover 31 may be various, such as copper, iron, aluminum, stainless steel, aluminum alloy, and plastic. This is not particularly limited in the embodiments of this application. In some embodiments, an insulating member may alternatively be disposed on the inner side of the end cover 31, and the insulating member may be used to isolate electrical connection components in the case 32 from the end cover 31 to reduce the risk of short circuit. For example, the insulating member may be plastic, rubber, or the like.

The case 32 is an assembly used to cooperate with the end cover 31 to form the internal environment of the battery cell 300, where the formed internal environment may be used to accommodate the electrode assembly 33, electrolyte, and other components. The case 32 and the end cover 31 may be independent components, an opening may be provided on the case 32, and the end cover 31 covers the opening to form the internal environment of the battery cell 300. Without limitation, the end cover 31 and the case 32 may also be integrated, specifically, the end cover 31 and the case 32 may first form a common connection surface before other components are installed into the box body, and when it is necessary to seal the interior of the case 32, the end cover 31 covers the case 32. The case 32 may be in multiple shapes and multiple sizes, such as a cuboid shape, a cylindrical shape, and a hexagonal prism shape. Specifically, the shape of the case 32 may be determined according to the specific shape and size of the electrode assembly 33. The material of the case 32 may be various, such as copper, iron, aluminum, stainless steel, and aluminum alloy, and the embodiments of this application do not specifically limit this.

The electrode assembly 33 is a component in the battery cell 300 in which electrochemical reactions occur. The case 32 may contain one or more electrode assemblies 33. The electrode assembly 33 is mainly formed by winding or stacking a positive electrode sheet and a negative electrode sheet, and a separator is usually disposed between the positive electrode sheet and the negative electrode sheet. The parts of the positive electrode sheet and the negative electrode sheet with active materials constitute the main body portion of the electrode assembly 33, and the parts of the positive electrode sheet and the negative electrode sheet without active materials each constitute tabs. The positive electrode tab and the negative electrode tab may be located together at one end of the main body portion or respectively at both ends of the main body portion. During the charging and discharging process of the battery 200, the positive electrode active material and the negative electrode active material react with the electrolyte, and the tabs are connected to the electrode terminal to form a current loop.

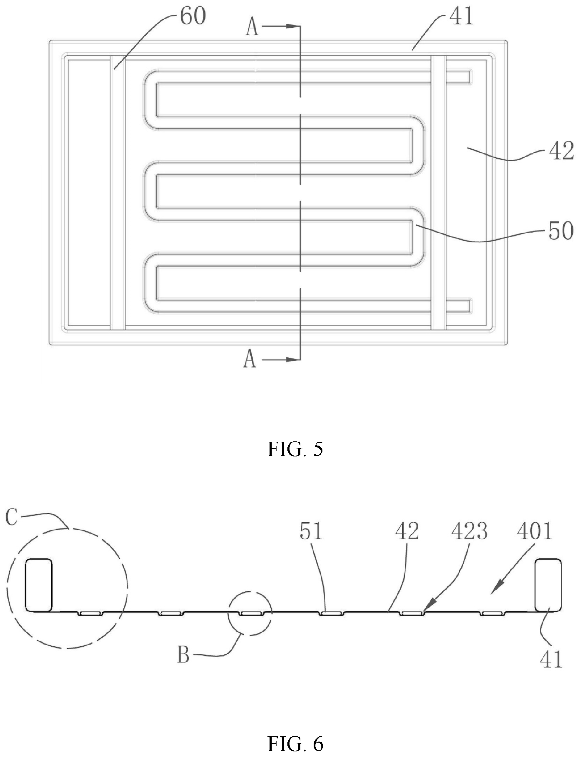

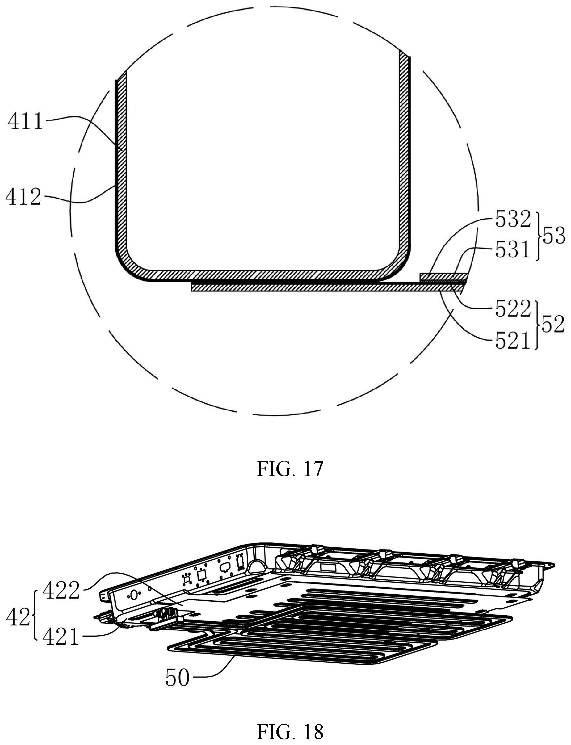

According to a first aspect, some embodiments of this application provide a box body 400, referring to FIG. 4, FIG. 5, and FIG. 18, where FIG. 4 is a perspective schematic diagram of a lower box body 40 according to some embodiments of this application, FIG. 5 is a top view schematic diagram of the lower box body 40 according to some embodiments of this application, and FIG. 18 is an exploded schematic diagram of the lower box body 40 according to some embodiments of this application.

In some embodiments of this application, the box body 400 is configured to accommodate battery cells 300, and the box body 400 includes: a lower box body 40 and a temperature control assembly 50; where the lower box body 40 includes a box body steel layer and a box body aluminum layer; the temperature control assembly 50 is connected to the lower box body 40, the temperature control assembly 50 includes a temperature control aluminum layer, and the temperature control aluminum layer is welded to the box body aluminum layer.

The lower box body 40 refers to a structure in the box body 400 used to cooperate with the upper box body 70 to enclose a space for accommodating a battery cell 300; the shape of the lower box body 40 may be cylindrical, prismatic, or other shapes; and the material of the lower box body 40 can include steel, aluminum, or other materials, since steel is an iron-carbon alloy, that is, the material of the lower box body 40 can include iron, carbon, aluminum, or other materials.

The lower box body 40 may be a hollow structure with one end open; in this case, the lower box body 40 can cooperate with the upper box body 70 to enclose an accommodating space, and the accommodating space can accommodate battery cells 300 and is isolated from the outside; the lower box body 40 may also be a structure with both ends open; and in this case, the lower box body 40 can cooperate with the upper box body 70 and a bottom structure to enclose an accommodating space, and the accommodating space can accommodate battery cells 300 and is isolated from the outside.

The temperature control assembly 50 refers to a structure in the box body 400 used to control the internal temperature of the box body 400. Since the battery cells 300 in the box body 400 are prone to generate a large amount of heat during use, the temperature control assembly 50 is mainly used to reduce the internal temperature of the box body 400, but under certain working conditions, the temperature control assembly 50 can also play a role in increasing the internal temperature of the box body 400; and the temperature control assembly 50 can perform heat exchange with the accommodating space of the box body 400 through a flowing heat exchange medium, and the heat exchange medium may be a gas, a liquid, or other media.

The temperature control assembly 50 is connected to the lower box body 40, and the temperature control assembly 50 may be located in the accommodating space of the box body 400 or outside the box body 400. In some embodiments, the temperature control assembly 50 is located in the accommodating space of the box body 400 and connected to the lower box body 40; in some other embodiments, the temperature control assembly 50 is located outside the lower box body 40 and connected to the lower box body 40, and in this case, the temperature control assembly 50 does not occupy the internal space of the lower box body 40; and in still some other embodiments, the temperature control assembly 50 may also serve as the bottom structure of the lower box body 40, and in this case, the lower box body 40 may be a structure with both ends open.

The box body steel layer refers to a layered structure in the lower box body 40 whose main material is steel, and in this case, the box body steel layer mainly has the characteristics of steel. For example, the material of the box body steel layer may include only steel (carbon and iron), or include other materials and make the specific gravity of steel greater than the specific gravity of other materials.

The box body aluminum layer refers to a layered structure in the lower box body 40 whose main material is aluminum, and in this case, the box body aluminum layer mainly has the characteristics of aluminum. For example, the material of the box body aluminum layer may include only aluminum, or include other materials and make the specific gravity of aluminum greater than the specific gravity of other materials.

The lower box body 40 includes the box body steel layer and the box body aluminum layer. Since the main function of the lower box body 40 is to provide protection and support for structures such as battery cells 300 in the accommodating space, the strength of the lower box body 40 should be high. Making the lower box body 40 include the box body steel layer can make the lower box body 40 have high strength, so as to provide protection for structures such as battery cells 300 in the accommodating space; and since the temperature control assembly 50 needs to be connected to the lower box body 40, the lower box body 40 includes the box body aluminum layer, so that the material at the connection between the temperature control assembly 50 and the lower box body 40 may be uniform, thereby improving the connection strength at the connection between the temperature control assembly 50 and the lower box body 40, and facilitating connection of the temperature control assembly 50 to the lower box body 40. Meanwhile, since aluminum has good corrosion resistance, the box body aluminum layer can also reduce possible external corrosion to the box body steel layer.

The temperature control aluminum layer refers to a layered structure in the temperature control assembly 50 whose main material is aluminum, and in this case, the temperature control aluminum layer mainly has the characteristics of aluminum. For example, the material of the temperature control aluminum layer may include only aluminum, or include other materials and make the specific gravity of aluminum greater than the specific gravity of other materials.

Since the temperature control assembly 50 is mainly used for heat exchange with the accommodating space, the requirement for strength of the temperature control assembly 50 is low. Making the temperature control assembly 50 include the temperature control aluminum layer can make the temperature control assembly 50 have strong thermal conductivity, and also reduce the weight of the temperature control assembly 50, thereby reducing the overall weight of the box body 400. In addition, aluminum also has good corrosion resistance, for example, an oxide film may be formed on the surface of aluminum to reduce corrosion of the temperature control assembly 50 by the heat exchange medium.

The temperature control aluminum layer is welded to the box body aluminum layer. For example, the temperature control aluminum layer may be welded to the box body aluminum layer through welding processes such as pressure welding, brazing, or fusion welding.

Since the main materials of the temperature control aluminum layer and the box body aluminum layer are both aluminum, the two can have similar melting points. Therefore, welding can make the connection part between the temperature control aluminum layer and the box body aluminum layer have high mechanical strength. Compared with connection through structures such as bolts, welding is simpler to implement, and the resulting structure is lighter in weight.

In this embodiment, the temperature control assembly 50 is connected to the box body aluminum layer of the lower box body 40 through the temperature control aluminum layer, so that the materials at the connection between the temperature control assembly 50 and the lower box body 40 are uniform or substantially uniform, thereby enabling the temperature control assembly 50 to be more stably connected to the lower box body 40. When the external environment changes (such as heating or cooling), both the temperature control assembly 50 and the lower box body 40 will deform at the connection part. Since the materials at the connection between the temperature control assembly 50 and the lower box body 40 are uniform or substantially uniform, the deformation at the connection between the two may also be uniform or substantially uniform, thereby reducing the additional load that may be caused to the connection part by different material deformations, reducing the risk of deformation, fracture, and other conditions at the connection between the temperature control assembly 50 and the lower box body 40, and increasing the stability of the connection. Since the deformation at the connection between the temperature control assembly 50 and the lower box body 40 may also be uniform or substantially uniform, it can also reduce the gaps that may be caused by material deformation, so as to improve the connection sealing performance between the temperature control assembly 50 and the lower box body 40, and save additional sealing structures

(such as sealing rings), thereby further reducing the overall weight of the box body 400; and the materials of the temperature control assembly 50 and the lower box body 40 being uniform or substantially uniform can also reduce the welding difficulty.

According to some embodiments of this application, referring to FIG. 5 to FIG. 8, the lower box body 40 includes a bottom plate 42 and an accommodating cavity 401 formed on a side of the bottom plate 42, the bottom plate 42 includes a bottom plate steel layer 421 and a bottom plate aluminum layer 422, and the bottom plate aluminum layer 422 covers at least part of the bottom plate steel layer 421.

The bottom plate 42 refers to a component in the lower box body 40 used to bear structures such as battery cells 300, and structures such as battery cells 300 may be installed on the bottom plate 42 to be accommodated in the box body 400, and the bottom plate 42 is further configured to provide protection for structures such as battery cells 300 in the box body 400; the shape of the bottom plate 42 may be rectangular, circular, or other shapes.

The bottom plate steel layer 421 refers to a layered structure in the bottom plate 42 whose main material is steel, and the bottom plate aluminum layer 422 refers to a layered structure in the bottom plate 42 whose main material is aluminum; the bottom plate aluminum layer 422 is disposed on the bottom plate steel layer 421, and the bottom plate steel layer 421 and the bottom plate aluminum layer 422 may be compounded to form the bottom plate 42. The bottom plate steel layer 421 and the bottom plate aluminum layer 422 may be compounded through a rolling process to form the bottom plate 42, or through explosive compounding, adhesive compounding, or other methods. It may be understood that, in addition to the bottom plate steel layer 421 and the bottom plate aluminum layer 422, the bottom plate 42 may also include layered structures of other materials and compounded with the bottom plate aluminum layer 422 and the bottom plate steel layer 421.

When the lower box body 40 includes the bottom plate 42, the box body steel layer includes the bottom plate steel layer 421, the box body aluminum layer includes the bottom plate aluminum layer 422, and in this case, the temperature control aluminum layer is connected to the bottom plate aluminum layer 422.

The accommodating cavity 401 refers to a space in the lower box body 40 used to accommodate battery cells 300 or other structures, and the accommodating cavity 401 may be part of the accommodating space of the box body 400. For example, the bottom plate 42 may form a basin-shaped structure through a stamping process or the like to enclose the accommodating cavity 401. For another example, when the upper box body 70 is a hollow structure with an end open, the bottom plate 42 may be a plate-shaped structure and cooperate with the upper box body 70 to enclose the accommodating cavity 401. It may be understood that the bottom plate 42 may also cooperate with other structures or enclose the accommodating cavity 401 through other methods.

The bottom plate aluminum layer 422 covers at least part of the bottom plate steel layer 421. Since the main function of the bottom plate aluminum layer 422 is to allow the temperature control assembly 50 to be connected to the bottom plate 42, the bottom plate aluminum layer 422 may cover the entire bottom plate steel layer 421, or cover only the bottom plate steel layer 421 at the position in which the temperature control assembly 50 needs to be installed. For example, since the bottom plate 42 is connected to the temperature control assembly 50 through the bottom plate aluminum layer 422, the bottom plate aluminum layer 422 at least covers the bottom plate steel layer 421 at the position of the bottom plate 42 opposite to the temperature control assembly 50. The bottom plate aluminum layer 422 may also cover more positions of the bottom plate steel layer 421, so as to protect the bottom plate steel layer 421 and enhance the overall strength of the bottom plate 42, and also facilitate connection of other aluminum structures to the bottom plate 42.

Configuring the bottom plate 42 to include the bottom plate steel layer 421 can enhance the strength of the bottom plate 42, thereby facilitating better support for structures such as battery cells 300 and temperature control assembly 50 by the bottom plate 42, and also better protecting structures such as battery cells 300 in the accommodating cavity 401; and configuring the bottom plate 42 to include the bottom plate aluminum layer 422 facilitates connection of the flow channel tube 51 to the bottom plate 42.

In this embodiment, the lower box body 40 is configured to include the bottom plate 42 and form the accommodating cavity 401 on one side of the bottom plate 42 to accommodate battery cells 300; the bottom plate 42 is configured to include the bottom plate steel layer 421, so that the bottom plate 42 has high strength, thereby enhancing the load-bearing capacity of the bottom plate 42; and the bottom plate 42 is configured to include the bottom plate aluminum layer 422, so as to facilitate the connection of the temperature control assembly 50 to the bottom plate 42.

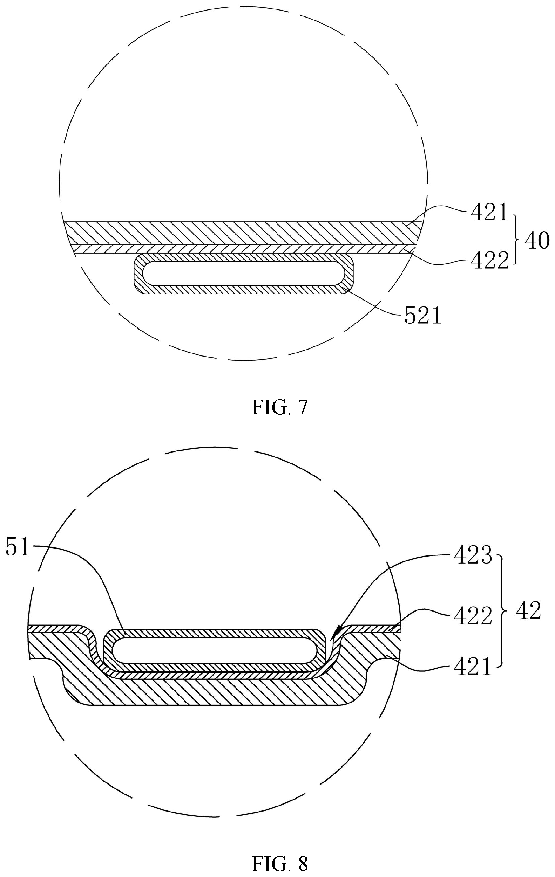

Referring to FIG. 7 and FIG. 8, in some embodiments, the temperature control assembly 50 includes a flow channel tube 51 connected to the bottom plate aluminum layer 422; and a flow channel is formed inside the flow channel tube 51.

The flow channel tube 51 refers to a structure constituting the temperature control assembly 50; and the shape of the flow channel tube 51 may be rectangular, circular, or other shapes.

The flow channel refers to a channel structure in the temperature control assembly 50 used for the flow of the heat exchange medium; and the shape of the flow channel may be circular, rectangular, or other shapes.

Since the temperature control assembly 50 includes the temperature control aluminum layer, the flow channel tube 51 may be made by bending the temperature control aluminum layer, and the flow channel tube 51 is connected to the bottom plate aluminum layer 422, so that the material at the connection between the flow channel tube 51 and the bottom plate 42 is uniform or substantially uniform, reducing the connection difficulty, and also enabling the flow channel tube 51 and the bottom plate 42 to have uniform or substantially uniform deformation amount when the external environment changes, reducing the difference in deformation amount between the flow channel tube 51 and the bottom plate 42, thereby reducing the load additionally borne by the connection part between the flow channel tube 51 and the bottom plate 42 due to the deformation of the two, and enhancing the stability of the connection.

In this embodiment, the temperature control assembly 50 is configured to include the flow channel tube 51 and connect to the bottom plate 42, and configures the flow channel to be formed inside the flow channel tube 51, so as to facilitate flow of the heat exchange medium in the flow channel of the temperature control assembly 50.

Referring to FIG. 8, in some embodiments, the bottom plate aluminum layer 422 is disposed on a side of the bottom plate steel layer 421 facing the accommodating cavity 401, the bottom plate 42 is recessed with a first groove 423 in a direction away from the accommodating cavity 401, and at least part of the flow channel tube 51 is accommodated in the first groove 423.

The first groove 423 refers to a groove structure recessed on the bottom plate 42 in a direction away from the accommodating cavity 401, and the opening of the first groove 423 faces the accommodating cavity 401 to accommodate the flow channel tube 51; and the first groove 423 may be a semicircular groove, a rectangular groove, a trapezoidal groove, or a groove of other shapes.

Since the flow channel tube 51 is connected to the bottom plate aluminum layer 422, configuring the bottom plate aluminum layer 422 to be disposed on a side of the bottom plate steel layer 421 facing the accommodating cavity 401 means that the flow channel tube 51 is connected to a side of the bottom plate 42 facing the accommodating cavity 401, and in this case, the flow channel tube 51 is accommodated in the accommodating cavity 401, so as to facilitate better heat exchange between the temperature control assembly 50 and the battery cells 300 in the accommodating cavity 401.

At least part of the flow channel tube 51 being accommodated in the first groove 423 means that at least part of the flow channel tube 51 is accommodated in the first groove 423. For example, the flow channel tube 51 may be only partially accommodated in the first groove 423, and part is exposed outside the first groove 423, and the flow channel tube 51 may also be completely accommodated in the first groove 423.

Since the flow channel tube 51 is disposed on a side of the bottom plate 42 facing the accommodating cavity 401, the flow channel tube 51 will occupy the space of the accommodating cavity 401 and affect the installation of the battery cells 300. Arrangement the first groove 423 to accommodate the flow channel tube 51 can reduce the height of the flow channel tube 51 protruding from the bottom plate 42, thereby reducing the occupation of the space of the accommodating cavity 401 by the flow channel tube 51, and facilitating the arrangement of the battery cells 300.

In this embodiment, the flow channel tube 51 is disposed in the accommodating cavity 401, so as to facilitate better heat exchange between the flow channel tube 51 and the accommodating cavity 401; and the first groove 423 is disposed on the bottom plate 42, and at least part of the flow channel tube 51 is accommodated in the first groove 423, so as to reduce the occupation of the space of the accommodating cavity 401 by the flow channel tube 51.

Referring to FIG. 8, in some embodiments, a surface of the flow channel tube 51 facing the accommodating cavity 401 is flush with a surface of the bottom plate 42 facing the accommodating cavity 401.

The surface of the flow channel tube 51 facing the accommodating cavity 401 being flush with the surface of the bottom plate 42 facing the accommodating cavity 401 means that the flow channel tube 51 is completely accommodated in the first groove 423. This arrangement makes the side of the temperature control assembly 50 facing the accommodating cavity 401 relatively flat, thereby reducing the occupation of the space of the accommodating cavity 401 by the temperature control assembly 50, and also reducing the restriction of the temperature control assembly 50 on the installation of the battery cells 300, facilitating the installation and arrangement of the battery cells 300 in the required manner.

In addition, this arrangement also prevents the protruding height of the first groove 423 on the side of the plate body away from the flow channel tube 51 from being excessively high, thereby reducing the occupation of the external space by the temperature control assembly 50, and also facilitating the installation of the box body 400 at the required position.

Referring to FIG. 7, in some embodiments, the bottom plate aluminum layer 422 is disposed on a side of the bottom plate steel layer 421 away from the accommodating cavity 401.

Since the flow channel tube 51 is connected to the bottom plate aluminum layer 422, configuring the bottom plate aluminum layer 422 to be disposed on a side of the bottom plate steel layer 421 away from the accommodating cavity 401 means that the flow channel tube 51 is connected to a side of the bottom plate 42 away from the accommodating cavity 401, and in this case, the flow channel tube 51 is located outside the accommodating cavity 401, thereby further reducing the occupation of the space of the accommodating cavity 401 by the flow channel tube 51.

In some embodiments, the flow channel tube 51 includes a structural aluminum layer, the temperature control aluminum layer includes the structural aluminum layer, and the structural aluminum layer is connected through brazing to the bottom plate aluminum layer 422.

The structural aluminum layer refers to a layered structure in the flow channel tube 51 whose main material is aluminum, and the structural aluminum layer can form a pipeline structure through bending, welding, or other methods. It may be understood that, in addition to the structural aluminum layer, the flow channel tube 51 may also include layered structures of other materials and compounded with the structural aluminum layer.

When the temperature control assembly 50 includes the flow channel tube 51, the temperature control aluminum layer includes the structural aluminum layer, and in this case, the structural aluminum layer is connected to the bottom plate aluminum layer 422.

Brazing features a fast heating speed, small material deformation, and simple operation, and the joint formed by brazing has high mechanical strength and good airtightness. Configuring the structural aluminum layer to be connected through brazing to the bottom plate aluminum layer 422 can reduce the deformation of the structural aluminum layer and the bottom plate aluminum layer 422 during the connection process, and also enable the connection part to have high mechanical strength and good airtight performance, while saving structures such as fasteners, reducing the overall weight of the box body 400, and also reducing the connection difficulty and simplifying the connection process.

In this embodiment, the structural aluminum layer is configured to be connected through brazing to the bottom plate aluminum layer 422, so that the connection between the structural aluminum layer and the bottom plate aluminum layer 422 has high connection strength and good sealing performance, while saving structures such as fasteners, reducing the overall weight of the box body 400, and also reducing the connection difficulty and simplifying the connection process.

According to some embodiments of this application, referring to FIG. 5, FIG. 6, and FIG. 9 to FIG. 14, the lower box body 40 further includes a side beam 41, and the bottom plate 42 is connected to the side beam 41 and encloses the accommodating cavity 401 with the side beam 41.

The side beam 41 refers to a structure in the lower box body 40 that plays a supporting and protecting role on the peripheral side of the box body 400; the side beam 41 may be a box beam, an H-beam, or a beam of other shapes; the cross-sectional shape of the side beam 41 may be rectangular or other shapes; when the side beam 41 is a box beam, the side beam 41 may be formed by rolling, or formed by local rolling combined with arc welding, and the side beam 41 may also be formed by other methods; and the material of the side beam 41 can include steel, aluminum, or other materials.

The side beam 41 and the bottom plate 42 can enclose the accommodating cavity 401. In this arrangement, the side beam 41 may be used to improve the overall strength of the lower box body 40, and also to better protect structures such as battery cells 300 inside the box body 400 from the side; in this arrangement, the bottom plate 42 is mainly used to bear structures such as battery cells 300 in the box body 400.

The bottom plate 42 may be connected to the side beam 41 through welding, gluing, screwing, or other methods; and the material of the side beam 41 can include steel, aluminum, or other materials. According to the material at the connection between the side beam 41 and the bottom plate 42, the bottom plate steel layer 421 may be connected to the side beam 41, or the bottom plate aluminum layer 422 may be connected to the side beam 41.

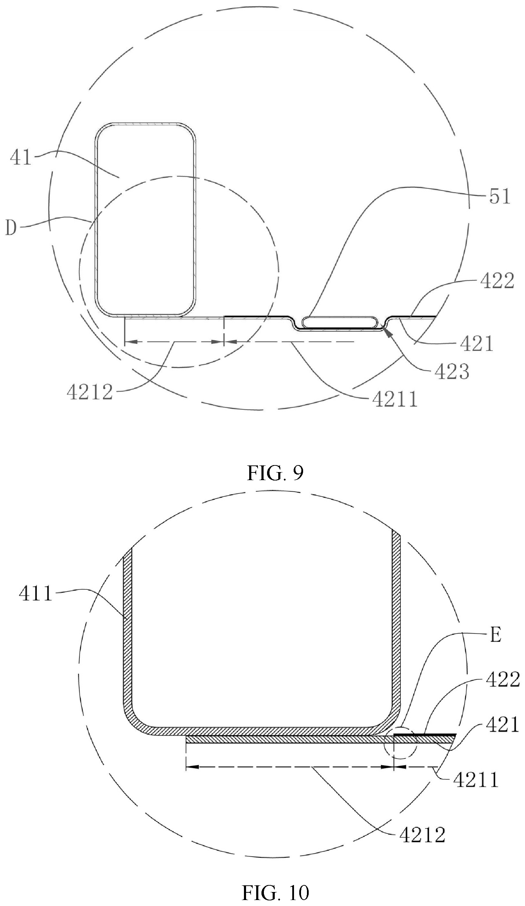

Referring to FIG. 10 to FIG. 12, the side beam 41 includes a side beam steel layer 411, and the side beam steel layer 411 is connected to the bottom plate steel layer 421.

The side beam steel layer 411 refers to a layered structure in the side beam 41 whose main material is steel, and in this case, the side beam steel layer 411 mainly has the characteristics of steel. For example, the material of the side beam steel layer 411 may include only steel (carbon and iron), or include other materials and make the specific gravity of steel greater than the specific gravity of other materials; when the side beam 41 is a box beam, the plate-shaped side beam steel layer 411 may be rolled to form the side beam 41.

Since the main function of the side beam 41 is to protect structures such as battery cells 300 in the accommodating cavity 401 and provide a fixed foundation for the bottom plate 42, the strength of the side beam 41 should be strong. Making the side beam 41 include the side beam steel layer 411, even if the main material of the side beam 41 is steel, this arrangement makes the side beam 41 have high strength to better play a protective role.

The side beam steel layer 411 being connected to the bottom plate steel layer 421 means that the material at the connection between the side beam 41 and the bottom plate 42 is uniform, enabling the bottom plate 42 to be more stably connected to the side beam 41. When the external environment changes, both the bottom plate 42 and the side beam 41 will deform at the connection part. Since the materials at the connection between the bottom plate 42 and the side beam 41 are uniform, the deformation at the connection between the bottom plate 42 and the side beam 41 may also be uniform or substantially uniform, thereby reducing the additional load that may be caused to the connection part by different material deformations, reducing the risk of deformation, fracture, and other conditions at the connection between the bottom plate 42 and the side beam 41, increasing the stability of the connection, enhancing the overall strength of the lower box body 40, and also reducing the connection difficulty.

The bottom plate steel layer 421 may be connected to the side beam steel layer 411 through welding, gluing, screwing, or other methods. In some embodiments, the bottom plate steel layer 421 is connected to the side beam steel layer 411 through a laser welding process.

Referring to FIG. 10, in some embodiments, the bottom plate steel layer 421 includes a main body portion 4211 and an edge portion 4212 disposed on a peripheral side of the main body portion 4211, the bottom plate aluminum layer 422 covers the main body portion 4211 and exposes the edge portion 4212, and the edge portion 4212 is connected to the side beam steel layer 411.

The main body portion 4211 refers to a part in the bottom plate steel layer 421 located in the central position, and the edge portion 4212 refers to a part in the bottom plate steel layer 421 located in the edge position, and the edge portion 4212 is located on the peripheral side of the main body portion 4211; the main body portion 4211 and the edge portion 4212 may be merely two parts defined on the bottom plate steel layer 421, or defined by structures such as notches; the main body portion 4211 and the edge portion 4212 may be integrally formed, or be two independent structures respectively and connected through welding, gluing, or other methods.

The bottom plate aluminum layer 422 covering the main body portion 4211 means that the edge portion 4212 is not covered by the bottom plate aluminum layer 422 and can directly face the side beam 41, so as to facilitate direct connection of the edge portion 4212 to the side beam steel layer 411, thereby enabling the bottom plate steel layer 421 to be connected to the side beam steel layer 411 through the edge portion 4212.

The bottom plate aluminum layer 422 exposing the edge portion 4212 may be achieved in various ways. In some embodiments, before compounding the bottom plate steel layer 421 and the bottom plate aluminum layer 422, the area of the bottom plate aluminum layer 422 may be made smaller than the area of the bottom plate steel layer 421 first, specifically, during blanking, the area of the bottom plate aluminum layer 422 is made smaller than the area of the bottom plate steel layer 421 first, so that after compounding the bottom plate aluminum layer 422 with the bottom plate steel layer 421, the edge portion 4212 may be exposed. In some other embodiments, after compounding the bottom plate steel layer 421 and the bottom plate aluminum layer 422, the edge portion 4212 may be exposed by aluminum peeling. For example, after compounding the bottom plate steel layer 421 and the bottom plate aluminum layer 422, the part of the bottom plate aluminum layer 422 opposite to the edge portion 4212 is peeled off to expose the edge portion 4212, and this peeling may be performed through laser peeling, cutter shearing peeling, or other methods. It may be understood that the edge portion 4212 may also be exposed to the outside through other methods, and is not limited to the above two.

Referring to FIG. 10, the bottom plate aluminum layer 422 can cover the entire main body portion 4211 and expose the edge portion 4212. Since the bottom plate aluminum layer 422 has the function of reducing corrosion of the bottom plate steel layer 421, this arrangement can increase the area of the bottom plate steel layer 421 covered by the bottom plate aluminum layer 422 to increase the protected area of the bottom plate steel layer 421. Meanwhile, the larger area of the bottom plate aluminum layer 422 may also make the temperature control assembly 50 have a larger connection area during connection; the bottom plate aluminum layer 422 may also cover only part of the main body portion 4211 and expose the part of the main body portion 4211 close to the edge portion 4212. When the edge portion 4212 is connected to the side beam steel layer 411 and forms a connection structure, this arrangement can make a space exist between the bottom plate aluminum layer 422 and the connection structure, thereby reducing the interference of the bottom plate aluminum layer 422 on the connection between the edge portion 4212 and the side beam steel layer 411, and also reducing the damage to the bottom plate aluminum layer 422 caused by the edge portion 4212 during the process of connecting to the side beam steel layer 411.

Since the bottom plate 42 includes the bottom plate steel layer 421 and the bottom plate aluminum layer 422, in this embodiment, the bottom plate steel layer 421 is configured to include the main body portion 4211 and the edge portion 4212 disposed on the peripheral side of the main body portion 4211, and the bottom plate aluminum layer 422 is configured to cover only the main body portion 4211 to expose the edge portion 4212, so as to facilitate connection of the bottom plate steel layer 421 to the side beam steel layer 411 at the edge portion 4212. Configuring the bottom plate steel layer 421 to be connected to the side beam steel layer 411 at the edge portion 4212 enables the material at the connection between the bottom plate steel layer 421 and the side beam steel layer 411 to be uniform or substantially uniform, and makes the melting points at the connection of the two relatively close, thereby enhancing the mechanical strength at the connection between the two.

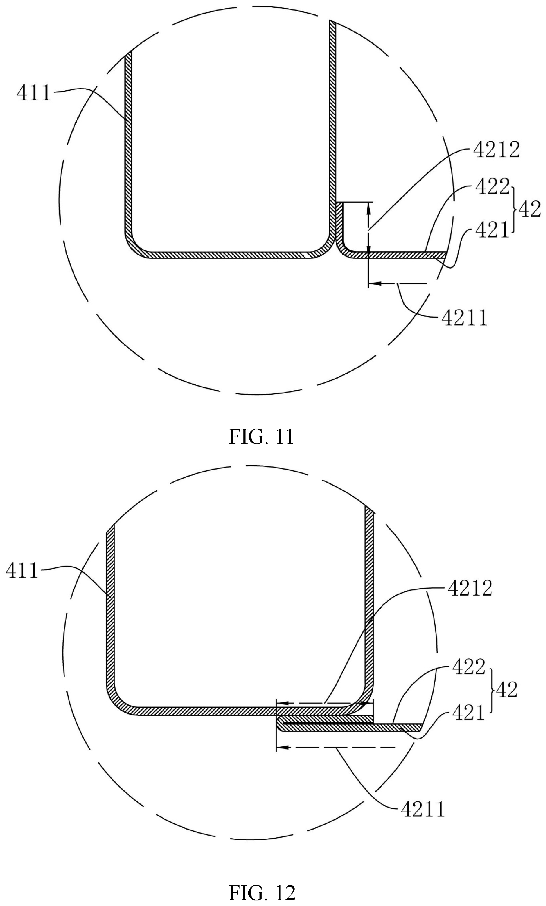

Referring to FIG. 11 and FIG. 12, in some embodiments, the bottom plate steel layer 421 includes a main body portion 4211 and an edge portion 4212 disposed on a peripheral side of the main body portion 4211, the edge portion 4212 is bent relative to the main body portion 4211 in a direction in which the bottom plate aluminum layer 422 is located, and a side of the edge portion 4212 away from the bottom plate aluminum layer 422 is connected to the side beam steel layer 411.

The main body portion 4211 refers to a part in the bottom plate steel layer 421 located in the central position, and the edge portion 4212 refers to a part in the bottom plate steel layer 421 located in the edge position, and the edge portion 4212 is located on the peripheral side of the main body portion 4211.

The edge portion 4212 is bent relative to the main body portion 4211, and the bending angle of the edge portion 4212 relative to the main body may be 90°, 180°, or other angles; and the bent edge portion 4212 may be connected to the side beam steel layer 411 through a side away from the bottom plate aluminum layer 422.

Since the edge portion 4212 is connected to the side beam steel layer 411 through a side away from the bottom plate aluminum layer 422 after bending, the bottom plate aluminum layer 422 can cover the entire bottom plate steel layer 421, or cover only the main body portion 4211.

In this embodiment, the edge portion 4212 is configured to be able to bend and cover part of the main body portion 4211, and the bent edge portion 4212 may also be opposite to the side beam 41 and connected to the side beam 41, so that the bottom plate steel layer 421 may be connected to the side beam steel layer 411, improving the connection strength and stability. Meanwhile, the bent edge portion 4212 may also make part of the bottom plate aluminum layer 422 near the edge portion 4212 located on a side of the bottom plate steel layer 421 away from the side beam 41, so as to reduce the interference of the bottom plate aluminum layer 422 on the connection between the bottom plate steel layer 421 and the side beam steel layer 411, and also play a role in protecting the bottom plate aluminum layer 422.

Referring to FIG. 11 and FIG. 12, in some embodiments, the edge portion 4212 is perpendicular to the main body portion 4211, or the edge portion 4212 is folded onto the main body portion 4211.

Referring to FIG. 11, the edge portion 4212 being perpendicular to the main body portion 4211 means that the edge portion 4212 is bent 90° relative to the main body portion 4211, in this case, the edge portion 4212 may be connected to a side of the side beam 41 facing the inside of the accommodating cavity 401; and the side of the bent edge portion 4212 away from the bottom plate aluminum layer 422 faces the side beam 41 and is connected to the side beam steel layer 411.

In such bottom plate steel layer 421, the interference of the bottom plate aluminum layer 422 on the connection between the bottom plate steel layer 421 and the side beam steel layer 411 may be reduced, and a protective role for the bottom plate aluminum layer 422 may also be played.

Referring to FIG. 12, the edge portion 4212 may also cover part of the main body portion 4211, specifically, the edge portion 4212 is bent 180° relative to the main body portion 4211 and covers part of the main body portion 4211 in the thickness direction of the plate body, specifically covering the area of the main body portion 4211 close to the edge portion 4212; the side of the bent edge portion 4212 away from the bottom plate aluminum layer 422 can face the side beam 41 and be connected to the side beam 41, and the part of the bottom plate aluminum layer 422 close to the edge portion 4212 may be clamped between the edge portion 4212 and the main body portion 4211 by the edge portion 4212.

In such bottom plate steel layer 421, the bending of the edge portion 4212 can make the side of the edge portion 4212 away from the bottom plate aluminum layer 422 directly face the side beam 41, so that the bottom plate steel layer 421 may be directly connected to the side beam steel layer 411, thereby making the connection strength between the plate body and the side beam 41 strong; the bent edge portion 4212 may also clamp the bottom plate aluminum layer 422 between the main body portion 4211 and the edge portion 4212, thereby reducing the impact of the bottom plate aluminum layer 422 on the connection between the bottom plate steel layer 421 and the side beam steel layer 411, and also playing a protective role for the bottom plate aluminum layer 422.

In this embodiment, the edge portion 4212 is configured to be able to be perpendicular to the main body portion 4211 and connected to the side beam 41, or folded onto the main body portion 4211 and connected to the side beam 41, so as to facilitate workers to select the bending manner according to actual working conditions, thus expanding the adaptation range of the structure of the box body 400.

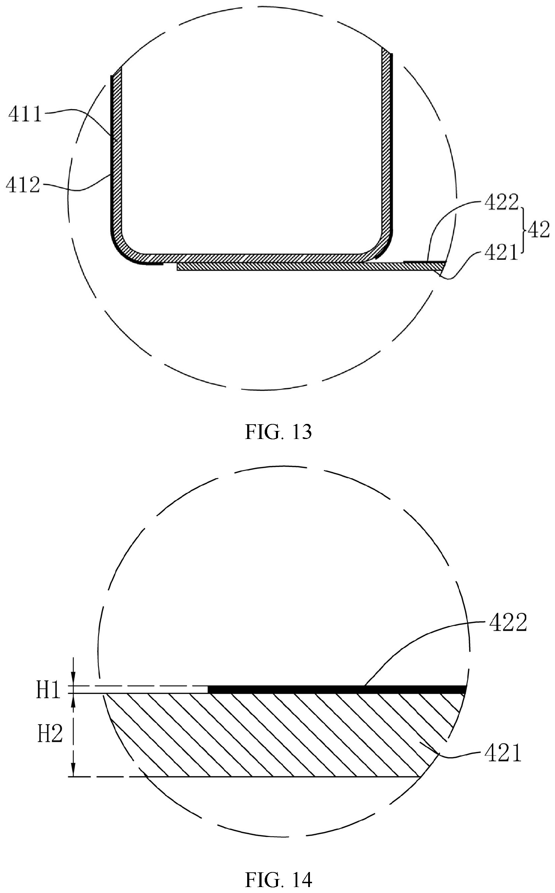

Referring to FIG. 13, in some embodiments, the side beam 41 further includes a side beam aluminum layer 412 at least covering part of the side beam steel layer 411.

The side beam aluminum layer 412 refers to a layered structure in the side beam 41 whose main material is aluminum, and in this case, the side beam aluminum layer 412 mainly has the characteristics of aluminum. For example, the material of the side beam aluminum layer 412 may include only aluminum, or include other materials and make the specific gravity of aluminum greater than the specific gravity of other materials.

The connection between the bottom plate 42 and the side beam 41 may be achieved by connecting the bottom plate aluminum layer 422 to the side beam aluminum layer 412, or by connecting the bottom plate steel layer 421 to the side beam steel layer 411; the side beam aluminum layer 412 may also be used to provide a welding foundation for other aluminum structures in the box body 400; the side beam aluminum layer 412 may also play a corrosion resistance role to reduce possible external corrosion to the side beam steel layer 411; compared with the side beam 41 of a pure steel structure, the arrangement of the side beam aluminum layer 412 may also play an effect of further improving the strength of the side beam 41.

The side beam aluminum layer 412 may cover only part of the side beam steel layer 411, or cover the entire side beam steel layer 411. For example, the side beam aluminum layer 412 may cover the part of the side beam 41 connected to the bottom plate 42, so that the side beam aluminum layer 412 may be connected to the bottom plate aluminum layer 422. For another example, the side beam aluminum layer 412 may also not cover the part of the side beam 41 connected to the bottom plate 42, so that the side beam steel layer 411 may be connected to the bottom plate steel layer 421. It may be understood that there may also be other positional relationships between the side beam aluminum layer 412 and the side beam steel layer 411, and is not limited to the above two.

The side beam steel layer 411 and the side beam aluminum layer 412 may be compounded through a rolling process to form a plate, or through explosive compounding, adhesive compounding, or other methods; after compounding the side beam steel layer 411 and the side beam aluminum layer 412 to form a plate, the plate may be rolled to form the side beam 41, or the plate may be respectively rolled and arc welded to form the side beam 41, or the plate may be processed into the side beam 41 through other methods; it may be understood that, in addition to the side beam steel layer 411 and the side beam aluminum layer 412, the side beam 41 may also include layered structures of other materials and compounded with the side beam steel layer 411 and the side beam aluminum layer 412.

Referring to FIG. 13, in some embodiments, the edge portion 4212 is welded to the side beam steel layer 411.

The edge portion 4212 being welded to the side beam steel layer 411 means that the bottom plate steel layer 421 is connected to the side beam steel layer 411, and the specific connection mode may be welding, bonding, or other methods. For example, the bottom plate steel layer 421 and the side beam steel layer 411 may be connected through laser welding. Laser welding has a large welding depth and small material deformation. Laser welding may also perform remote non-contact welding, which is more flexible and can adapt to various complex welding positions. The weld seam formed by laser welding has high mechanical strength and good sealing performance; and for another example, the bottom plate steel layer 421 and the side beam steel layer 411 may be connected through brazing. Brazing features a fast heating speed, small material deformation, and simple operation, and the joint formed by brazing has high mechanical strength and good airtightness.

The edge portion 4212 being welded to the side beam steel layer 411 means that the side beam aluminum layer 412 does not cover the part of the side beam 41 connected to the bottom plate 42, which may be achieved in various ways. In some embodiments, before compounding the side beam steel layer 411 and the side beam aluminum layer 412, the area of the side beam aluminum layer 412 may be made smaller than the area of the side beam steel layer 411 first, that is, during blanking, the area of the side beam aluminum layer 412 is made smaller than the area of the side beam steel layer 411 first, so that after compounding the side beam aluminum layer 412 with the side beam steel layer 411, the part of the side beam steel layer 411 connected to the bottom plate 42 may be exposed; in some other embodiments, after compounding the side beam steel layer 411 and the side beam aluminum layer 412, the part of the side beam steel layer 411 connected to the bottom plate 42 may be exposed by aluminum peeling. For example, after compounding the side beam steel layer 411 and the side beam aluminum layer 412, the part of the side beam aluminum layer 412 opposite to the part where the side beam steel layer 411 is connected to the bottom plate 42 is peeled off to expose the part of the side beam steel layer 411 connected to the bottom plate 42, and this peeling may be performed through laser peeling, cutter shearing peeling, or other methods; it may be understood that the part of the side beam steel layer 411 connected to the bottom plate 42 may also be exposed to the outside through other methods, and is not limited to the above two.

According to some embodiments of this application, referring to FIG. 4 and FIG. 5, the lower box body 40 further includes a reinforcing beam 60, where the reinforcing beam 60 is accommodated in the accommodating cavity 401, and the reinforcing beam 60 is a steel beam; and the bottom plate steel layer 421 is connected to the reinforcing beam 60.

The reinforcing beam 60 refers to a structure in the lower box body 40 disposed in the accommodating cavity 401. The reinforcing beam 60 may be an expansion beam used to suppress expansion of the battery cells 300, or a structural beam used to enhance the structural strength of the lower box body 40; the reinforcing beam 60 may be a box beam, an H-beam, or a beam of other shapes; the cross-sectional shape of the reinforcing beam 60 may be rectangular or other shapes; and when the reinforcing beam 60 is a box beam, the reinforcing beam 60 may be formed by rolling, or formed by local rolling combined with arc welding, and the reinforcing beam 60 may also be formed by other methods.

The reinforcing beam 60 may be connected to the side beam 41 to enhance the connection strength between the bottom plate 42 and the lower box body 40. Since the bottom plate 42 has the function of bearing structures such as battery cells 300, after the battery cells 300 are installed, the middle part of the bottom plate 42 will bear a larger pressure. Making the bottom plate 42 connected to the reinforcing beam 60 can enhance the load-bearing capacity of the bottom plate 42 in the middle, so as to reduce the occurrence of deformation of the bottom plate 42 in the middle or overall connection failure between the bottom plate 42 and the lower box body 40, enhancing the supporting performance and load-bearing capacity of the bottom plate 42.

Since the main function of the reinforcing beam 60 is to enhance the overall strength of the box body 400 and assist in enhancing the supporting performance and load-bearing capacity of the bottom plate 42, making the reinforcing beam 60 a steel beam can make the reinforcing beam 60 have strong strength.

The bottom plate steel layer 421 and the reinforcing beam 60 may be connected in multiple ways. In some embodiments, the bottom plate steel layer 421 is connected to the reinforcing beam 60 through bolts. For example, one end of the bolt passes through the bottom plate 42 and is fixed in the reinforcing beam 60 through threads to press the bottom plate steel layer 421 against the reinforcing beam 60, and in this case, the bolt should not pass through the flow channel. In some other embodiments, the bottom plate steel layer 421 is connected to the reinforcing beam 60 through welding. Since the material of the reinforcing beam 60 mainly includes steel, the first steel layer 521 of the plate body is welded to the reinforcing beam 60, and the first steel layer 521 of the plate body may be exposed at the position opposite to the reinforcing beam 60 through aluminum peeling or other methods, so as to facilitate welding of the first steel layer 521 to the reinforcing beam 60; and the bottom plate steel layer 421 may also be connected to the reinforcing beam 60 through other methods, and is not limited to the above two methods.

Configuring the bottom plate steel layer 421 to be connected to the reinforcing beam 60 enables the material at the connection between the bottom plate 42 and the reinforcing beam 60 to be uniform or substantially uniform, so as to enhance the stability at the connection between the bottom plate 42 and the reinforcing beam 60.

When the bottom plate aluminum layer 422 is disposed on a side of the bottom plate steel layer 421 facing the reinforcing beam 60, the part of the bottom plate steel layer 421 opposite to the reinforcing beam 60 may be exposed through aluminum peeling or other methods.

In this embodiment, the bottom plate steel layer 421 is configured to be connected to the reinforcing beam 60. Since the strength of the bottom plate steel layer 421 is higher than that of the bottom plate aluminum layer 422, connecting the bottom plate steel layer 421 to the reinforcing beam 60 can enhance the stability of the connection, and also facilitate flexible selection of different connection methods such as welding and screwing.

According to some embodiments of this application, referring to FIG. 5, FIG. 6, FIG. 9, FIG. 10, and FIG. 14, a thickness of the bottom plate steel layer 421 is greater than a thickness of the bottom plate aluminum layer 422.

The thickness of the bottom plate steel layer 421 refers to a dimension of the bottom plate steel layer 421 in the height direction of the box body 400, that is, the dimension shown as H2 in FIG. 14; and the thickness of the bottom plate aluminum layer 422 refers to a dimension of the bottom plate aluminum layer 422 in the height direction of the box body 400, that is, the dimension shown as H1 in FIG. 14.

Since the function of the bottom plate steel layer 421 is mainly to enhance the strength of the bottom plate 42, the thickness of the bottom plate steel layer 421 should be thicker to better play the role of enhancing the strength of the bottom plate 42. Since the function of the bottom plate aluminum layer 422 is mainly to make it easier for the temperature control assembly 50 to connect to the bottom plate 42, on the premise that the temperature control assembly 50 can connect to the bottom plate aluminum layer 422, the thickness of the bottom plate aluminum layer 422 should be thinner to reduce the overall thickness of the bottom plate 42 and reduce the space occupation of the bottom plate 42.

In this embodiment, the thickness of the bottom plate steel layer 421 is greater than the thickness of the bottom plate aluminum layer 422. Since the main function of the bottom plate steel layer 421 is to enhance the strength of the bottom plate 42, the thickness of the bottom plate steel layer 421 is made thicker to better enhance the strength of the bottom plate 42. Since the main function of the bottom plate aluminum layer 422 is to facilitate the connection of the flow channel tube 51, the thickness of the bottom plate aluminum layer 422 is made thinner, so that the bottom plate aluminum layer 422 may be connected to the flow channel tube 51 and also reduce the space occupation of the bottom plate aluminum layer 422, thereby reducing the overall thickness of the plate body.

Referring to FIG. 14, in some embodiments, the thickness of the bottom plate steel layer 421 ranges from 0.5 mm to 2.0 mm, and the thickness of the bottom plate aluminum layer 422 ranges from 0.05 mm to 1.0 mm.

The thickness of the bottom plate steel layer 421 refers to a dimension of the bottom plate steel layer 421 in the height direction of the box body 400, that is, the dimension shown as H1 in FIG. 14; and the specific thickness of the bottom plate steel layer 421 may be 0.5 mm, 0.7 mm, 0.9 mm, 1.1 mm, 1.3 mm, 1.5 mm, 1.7 mm, 1.9 mm, 2.0 mm, or other values.

The thickness of the bottom plate aluminum layer 422 refers to a dimension of the bottom plate aluminum layer 422 in the height direction of the box body 400, that is, the dimension shown as H2 in FIG. 14; and the thickness of the bottom plate aluminum layer 422 may be 0.05 mm, 0.1 mm, 0.25 mm, 0.4 mm, 0.55 mm, 0.7 mm, 0.85 mm, 1.0 mm, or other values.

Since the function of the bottom plate steel layer 421 is mainly to enhance the strength of the bottom plate 42, the thickness of the bottom plate steel layer 421 should be thicker to better play the role of enhancing the strength of the bottom plate 42. Since the function of the bottom plate aluminum layer 422 is mainly to make it easier for the temperature control assembly 50 to connect to the bottom plate 42, on the premise that the temperature control assembly 50 can connect to the bottom plate aluminum layer 422, the thickness of the bottom plate aluminum layer 422 should be thinner to reduce the overall thickness of the bottom plate 42 and reduce the space occupation of the bottom plate 42.

This embodiment provides some thickness ranges of the bottom plate steel layer 421 and the bottom plate aluminum layer 422, so that the thickness of the bottom plate steel layer 421 can be greater than the thickness of the bottom plate aluminum layer 422, thereby enhancing the strength of the temperature control assembly 50; in addition, the bottom plate aluminum layer 422 can be connected to the flow channel tube 51 and also reduce the space occupation of the bottom plate aluminum layer 422, thus reducing the overall thickness of the plate body.

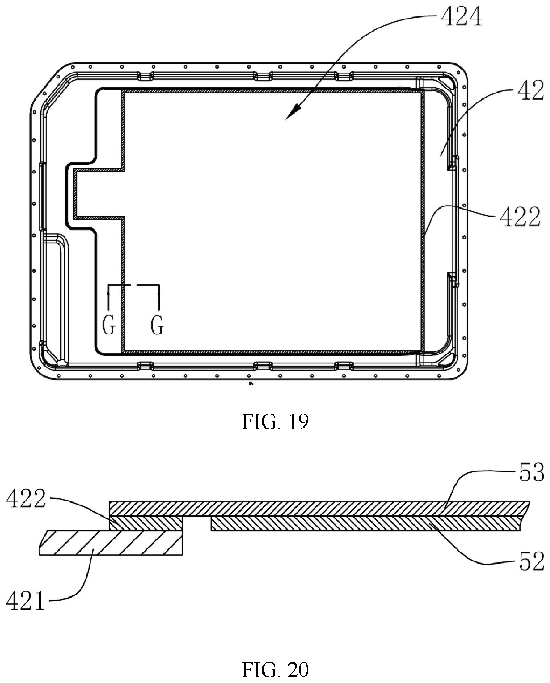

According to some embodiments of this application, referring to FIG. 19 and FIG. 20, a through hole 424 is provided in the bottom plate 42, and the temperature control assembly 50 covers the through hole 424.

The through hole 424 refers to a through hole provided on the bottom plate 42, and the accommodating cavity 401 can communicate with the outside through the through hole 424; when the bottom plate 42 includes the bottom plate aluminum layer 422 and the bottom plate steel layer 421, the through hole 424 passes through the bottom plate aluminum layer 422 and the bottom plate steel layer 421; the shape of the through hole 424 may be circular, rectangular, or other shapes.

The temperature control assembly 50 covering the through hole 424 means that the temperature control assembly 50 can close the through hole 424; the temperature control assembly 50 may be provided inside the accommodating cavity 401 and cover the through hole 424. For example, a relatively flat surface of the temperature control assembly 50 faces the inside of the accommodating cavity 401, and the opposite side faces the through hole 424, and in this case, the protruding part of the temperature control assembly 50 can enter the through hole 424, thereby reducing the height of the temperature control assembly 50 protruding from the bottom plate 42, and the relatively flat surface facing the accommodating cavity 401 can also reduce the negative impact of the temperature control assembly 50 on the installation and arrangement of the battery cells 300; and the temperature control assembly 50 may alternatively be disposed outside the accommodating cavity 401 and cover the through hole 424. For example, a relatively flat surface of the temperature control assembly 50 faces away from the accommodating cavity 401, and the opposite side faces the accommodating cavity 401, and in this case, the protruding part of the temperature control assembly 50 may enter the through hole 424, so as to facilitate the contact between the temperature control assembly 50 and the battery cells 300 in the accommodating cavity 401, thereby facilitating improvement of heat exchange efficiency, and the relatively flat surface facing the outside can also reduce the occupation of external space by the temperature control assembly 50, and reducing the installation demand of the box body 400 for external space as a whole.

Since the temperature control assembly 50 is connected to the bottom plate aluminum layer 422, when the temperature control assembly 50 is provided inside the accommodating cavity 401, the bottom plate aluminum layer 422 is disposed on a side of the bottom plate steel layer 421 facing the accommodating cavity 401, and when the temperature control assembly 50 is provided outside the accommodating cavity 401, the bottom plate aluminum layer 422 is disposed on a side of the bottom plate steel layer 421 away from the accommodating cavity 401; and the bottom plate aluminum layer 422 may be disposed only around the through hole 424 and cover the corresponding bottom plate steel layer 421 for connection of the temperature control assembly 50, or cover the entire bottom plate steel layer 421.

The temperature control assembly 50 may partially overlap on the bottom plate 42; the temperature control assembly 50 may alternatively be accommodated in the through hole 424 and connected to the side wall of the through hole 424, and in this case, the bottom plate aluminum layer 422 may be bent into the through hole 424 and at least cover part of the side wall of the through hole 424 for connection of the temperature control assembly 50.

The temperature control assembly 50 may have multiple structures; for example, the temperature control assembly 50 may include a first plate body 52 and a second plate body 53, and a flow channel is formed between the first plate body 52 and the second plate body 53, and in this case, the first plate body 52 may be connected to the bottom plate 42, or the second plate body 53 may be connected to the bottom plate 42. For another example, the temperature control assembly 50 may also include a flow channel tube 51, and in this case, the temperature control assembly 50 may also include a plate, the flow channel tube 51 is connected to the plate, and the plate covers the through hole 424.

This embodiment provides some other specific structures of the lower box body 40. A through hole 424 is provided in the bottom plate 42, and the temperature control assembly 50 covers the through hole 424, which can not only enable the temperature control assembly 50 to better perform heat exchange with the accommodating cavity 401, but also accommodate part of the temperature control assembly 50 through the through hole 424, so as to reduce the occupation of the space of the accommodating cavity 401 by the temperature control assembly 50.

Referring to FIG. 20, in some embodiments, the bottom plate aluminum layer 422 is disposed on a side of the bottom plate steel layer 421 facing the accommodating cavity 401, and the temperature control assembly 50 is disposed on a side of the bottom plate 42 facing the accommodating cavity 401.

The temperature control assembly 50 being provided on a side of the bottom plate 42 facing the accommodating cavity 401 means that the temperature control assembly 50 is provided in the accommodating cavity 401, and in this case, in addition to being used for heat exchange with the battery cells 300 to control the temperature of the battery cells 300, the temperature control assembly 50 is also used to bear the battery cells 300 or other structures in the accommodating cavity 401. This arrangement can enhance the supporting capability of the temperature control assembly 50 for the battery cells 300, and also reduce the load at the connection between the temperature control assembly 50 and the bottom plate 42. If the temperature control assembly 50 is disposed on a side of the bottom plate 42 away from the accommodating cavity 401, the pressure of structures such as battery cells 300 on the temperature control assembly 50 will easily concentrate at the position where the temperature control assembly 50 is connected to the bottom plate 42, and easily cause fracture and other issues at this position, and in this case, the strength requirement for the connection structure between the temperature control assembly 50 and the bottom plate 42 is high.

The temperature control assembly 50 being provided in the accommodating cavity 401 may also make the protruding part in the temperature control assembly 50 at least partially accommodated in the through hole 424, and in this case, the side wall of the through hole 424 can play a protective role for the temperature control assembly 50, thereby reducing possible damage to the temperature control assembly 50 caused by the external environment.

Since the temperature control assembly 50 is disposed on a side of the bottom plate 42 facing the inside of the accommodating cavity 401, and the temperature control assembly 50 is connected to the bottom plate aluminum layer 422, the bottom plate aluminum layer 422 is disposed on a side of the bottom plate steel layer 421 facing the accommodating cavity 401, so as to facilitate the connection of the temperature control assembly 50 to the bottom plate 42.

In this embodiment, the bottom plate aluminum layer 422 is disposed on a side of the bottom plate steel layer 421 facing the accommodating cavity 401, so that the temperature control assembly 50 may be disposed in the accommodating cavity 401 to enhance the supporting performance of the temperature control assembly 50. In addition, this can also reduce the height of the temperature control assembly 50 protruding from the bottom plate 42, thereby reducing the demand of the temperature control assembly 50 for external space, and also playing a role in protecting part of the temperature control assembly 50.

According to some embodiments of this application, referring to FIG. 5, FIG. 6, and FIG. 15 to FIG. 17, the lower box body 40 includes a side beam 41, and the side beam 41 includes a side beam steel layer 411 and a side beam aluminum layer 412 at least covering part of the side beam steel layer 411; and the temperature control assembly 50 is welded to the side beam aluminum layer 412.

When the lower box body 40 includes the side beam 41, the box body steel layer includes the side beam steel layer 411, the box body aluminum layer includes the side beam aluminum layer 412, and in this case, the temperature control aluminum layer is connected to the side beam aluminum layer 412.

The temperature control assembly 50 may be connected to the side beam aluminum layer 412 and can enclose the accommodating cavity 401, that is, the temperature control assembly 50 serves as the bottom structure of the lower box body 40 and encloses the accommodating cavity 401 with the side beam 41; accordingly, the side beam steel layer 411 is at least covered with the side beam aluminum layer 412 at the part opposite to the temperature control assembly 50 for connection of the temperature control assembly 50.

In addition to being used for heat exchange with the accommodating cavity 401, the temperature control assembly 50 is also used to bear battery cells 300 and provide protection for structures such as battery cells 300 in the accommodating cavity 401, and in this case, the temperature control assembly 50 can serve as the bottom plate of the lower box body 40, and the lower box body 40 does not need to be additionally provided with a bottom plate.

In this embodiment, the lower box body 40 is configured to include the side beam 41, and the temperature control assembly 50 is configured to be connected to the side beam 41, so that the temperature control assembly 50 can enclose the accommodating cavity 401 for accommodating a battery cell 300 with the side beam 41. In this way, the temperature control assembly 50 serves as the bottom structure of the lower box body 40 and replaces the bottom plate 42, so that the box body 400 does not need to accommodate the temperature control assembly 50, reducing the volume required by the box body 400, thereby reducing the volume of the box body 400, reducing the space occupied by the box body 400, improving the integration degree of the box body 400, and also reducing the overall weight of the box body 400.

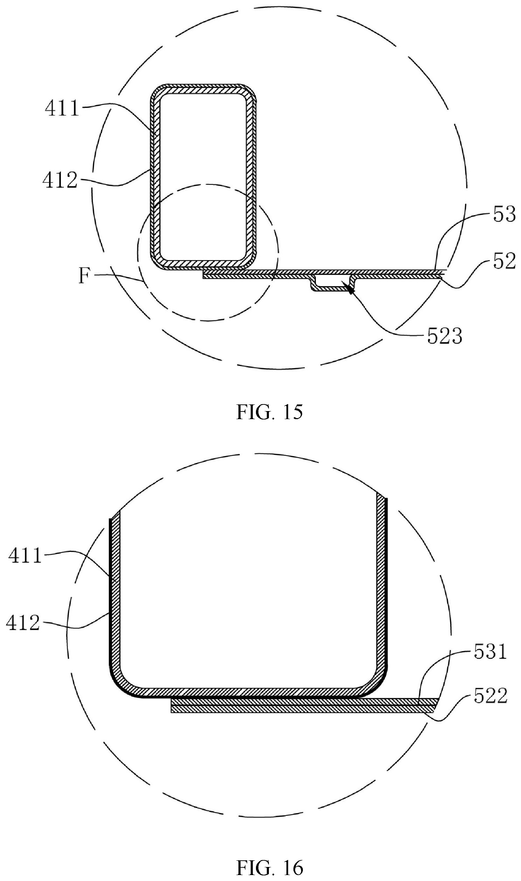

Referring to FIG. 15 and FIG. 16, in some embodiments, the temperature control assembly 50 includes a first plate body 52 and a second plate body 53, where a flow channel is formed between the first plate body 52 and the second plate body 53, the first plate body 52 includes a first aluminum layer 522, the second plate body 53 includes a second aluminum layer 531, and the first aluminum layer 522 is connected to the second aluminum layer 531; and the temperature control aluminum layer includes the first aluminum layer 522 or the second aluminum layer 531, and the first aluminum layer 522 or the second aluminum layer 531 is welded to the side beam aluminum layer 412.

A flow channel being formed between the first plate body 52 and the second plate body 53 means that the first plate body 52 and the second plate body 53 can enclose the flow channel. For example, a groove may be provided on any one of the first plate body 52 or the second plate body 53, and the other of the two covers the groove to form the flow channel. For another example, either or both of the first plate body 52 and the second plate body 53 may be bent into a groove-shaped structure and covered with each other to form the flow channel. It may be understood that the first plate body 52 and the second plate body 53 may also enclose the flow channel through other methods, and is not limited to the above two.

The first plate body 52 refers to a structure constituting the temperature control assembly 50; the shape of the first plate body 52 may be rectangular, circular, or other shapes; the second plate body 53 refers to a structure constituting the temperature control assembly 50; the shape of the second plate body 53 may be rectangular, circular, or other shapes; and the temperature control assembly 50 may be connected to the side beam 41 through the first plate body 52, or connected to the side beam 41 through the second plate body 53.

The first aluminum layer 522 refers to a layered structure in the first plate body 52 mainly including aluminum, and in this case, the first aluminum layer 522 mainly has the characteristics of aluminum. For example, the material of the first aluminum layer 522 may include only aluminum, or may include other materials and make the specific gravity of aluminum greater than the specific gravity of other materials; and in addition to the first aluminum layer 522, the first plate body 52 may also include layered structures of other materials and compounded with the first aluminum layer 522.

The second aluminum layer 531 refers to a layered structure in the second plate body 53 mainly including aluminum, and in this case, the second aluminum layer 531 mainly has the characteristics of aluminum. For example, the material of the second aluminum layer 531 can only include aluminum, or include other materials and make the specific gravity of aluminum greater than the specific gravity of other materials; and in addition to the second aluminum layer 531, the second plate body 53 may also include layered structures of other materials and compounded with the second aluminum layer 531.

When the temperature control assembly 50 includes the first plate body 52 and the second plate body 53, the temperature control aluminum layer includes the first aluminum layer 522 or the second aluminum layer 531, and in this case, the first aluminum layer 522 or the second aluminum layer 531 is welded to the bottom plate aluminum layer 422. For example, the first aluminum layer 522 may be welded to the side beam aluminum layer 412, or the second aluminum layer 531 may be welded to the side beam aluminum layer 412.

The first aluminum layer 522 being connected to the second aluminum layer 531 enables the first plate body 52 to be connected to the second plate body 53, and makes the material at the connection between the first plate body 52 and the second plate body 53uniform, reducing the connection difficulty, and also enabling the first aluminum layer 522 and the second aluminum layer 531 to have uniform or substantially uniform deformation amount when the external environment changes, reducing the difference in deformation amount between the first aluminum layer 522 and the second aluminum layer 531, thereby reducing the load additionally borne by the connection part between the first aluminum layer 522 and the second aluminum layer 531 due to the deformation of the two, and enhancing the stability of the connection.

Referring to FIG. 15, in some embodiments, the first plate body 52 is recessed with a second groove 523 in a direction away from the side beam 41, and the second plate body 53 is disposed on a side of the first plate body 52 facing the side beam 41 and covers the second groove 523.

The second groove 523 refers to a groove structure recessed on the first plate body 52 in a direction away from the side beam 41, and the opening of the second groove 523 faces the side beam 41, that is, the opening of the second groove 523 also faces the second plate body 53; the second groove 523 may be a semicircular groove, a rectangular groove, a trapezoidal groove, or a groove of other shapes.

The second plate body 53 can cover the second groove 523 and cooperate with the second groove 523 to enclose the flow channel, and in this case, the inner wall of the second groove 523 and the side wall of the second plate body 53 facing the first plate body 52 together enclose the flow channel, and the heat exchange medium can flow in the flow channel; the second plate body 53 may be a flat plate-shaped structure or a structure of other shapes; and the connection between the second plate body 53 and the first plate body 52 should have good sealing performance to reduce the occurrence of the heat exchange medium flowing into the accommodating cavity 401.

For example, the second plate body 53 may be a flat plate-shaped structure. Since the second plate body 53 is disposed on a side of the first plate body 52 facing the accommodating cavity 401, this arrangement can reduce the occupation of the space of the accommodating cavity 401 by the second plate body 53, and also reduce the possible negative impact on the installation of the battery cells 300 in the box body 400, facilitating the installation and arrangement of the battery cells 300 in the required manner.

Referring to FIG. 15, in some embodiments, a surface of the second plate body 53 away from the first plate body 52 is a flat surface.

The surface of the second plate body 53 away from the first plate body 52 is the surface of the second plate body 53 facing the inside of the box body 400. Configuring this surface as a flat surface can reduce the occupation of the internal space of the box body 400 by the second plate body 53, and also facilitate the arrangement of structures such as battery cells 300 in the box body 400.

Referring to FIG. 17, in some embodiments, the first plate body 52 further includes a first steel layer 521, the first steel layer 521 is disposed on a side of the first aluminum layer 522 away from the second aluminum layer 531; and/or the second plate body 53 further includes a second steel layer 532, the second steel layer 532 is disposed on a side of the second aluminum layer 531 away from the first aluminum layer 522.

The first steel layer 521 refers to a layered structure in the first plate body 52 mainly including steel. The first plate body 52 including the first steel layer 521 can increase the strength of the first plate body 52, thereby increasing the overall strength of the temperature control assembly 50. Since the temperature control assembly 50 serves as the bottom structure of the lower box body 40 and needs a certain supporting performance, and also needs to provide protection for structures such as battery cells 300 in the accommodating cavity 401, configuring the first plate body 52 to include the first steel layer 521 can improve the strength of the temperature control assembly 50, so that the temperature control assembly 50 may better provide support for structures such as battery cells 300 and better protect structures such as battery cells 300 in the accommodating cavity 401.

Similar to the first plate body 52, the second steel layer 532 refers to a layered structure in the second plate body 53 mainly including steel. The second plate body 53 including the second steel layer 532 can increase the strength of the second plate body 53, thereby increasing the overall strength of the temperature control assembly 50.

Since the first aluminum layer 522 is connected to the second aluminum layer 531 and encloses the flow channel, the first steel layer 521 should be provided on a side of the first aluminum layer 522 away from the second aluminum layer 531, and the second steel layer 532 should be provided on a side of the second aluminum layer 531 away from the first aluminum layer 522.

In addition, since the temperature control assembly 50 is connected to the side beam aluminum layer 412, when the second plate body 53 includes the second steel layer 532, the temperature control assembly 50 may be connected to the side beam aluminum layer 412 through the second aluminum layer 531, and in this case, the second steel layer 532 does not cover the part of the second aluminum layer 531 connected to the side beam aluminum layer 412; and when the second plate body 53 includes the second steel layer 532, the temperature control assembly 50 may also be connected to the side beam aluminum layer 412 through the first aluminum layer 522, and in this case, the second steel layer 532 and the second aluminum layer 531 do not cover the part of the first aluminum layer 522 connected to the side beam aluminum layer 412.

This embodiment provides some specific structures of the first plate body 52 and the second plate body 53, so that the first plate body 52 further includes the first steel layer 521 to enhance the strength of the first plate body 52, thereby enhancing the strength of the temperature control assembly 50, so as to facilitate better bearing of battery cells 300 by the temperature control assembly 50; and the second plate body 53 further includes the second steel layer 532 to enhance the strength of the second plate body 53, thereby enhancing the strength of the temperature control assembly 50, so as to facilitate better bearing of battery cells 300 by the temperature control assembly 50.

According to a second aspect, some embodiments of this application further provide a battery 200, including the box body 400 provided in some embodiments of the first aspect.

The battery 200 includes the box body 400 and battery cells 300, and the battery cells 300 are accommodated in the box body 400. In the battery 200 provided in this embodiment, the temperature control assembly 50 is located outside the accommodating cavity 401, thereby reducing the overall volume and space occupation of the battery 200 and facilitating the installation of the battery 200.

According to a third aspect, some embodiments of this application further provide an electrical device 100, including the battery 200 provided in some embodiments of the second aspect.

Finally, it should be noted that the above embodiments are only used to illustrate the technical solutions of this application, and not to limit them; although this application has been described in detail with reference to the foregoing embodiments, those of ordinary skill in the art should understand that: the technical solutions recorded in the foregoing embodiments can still be modified, or some or all of the technical features thereof may be equivalently replaced; these modifications or replacements do not make the essence of the corresponding technical solutions depart from the scope of the technical solutions of the embodiments of this application, and they should all be covered in the claims of this application and the scope of the specification. In particular, as long as there is no structural conflict, the various technical features mentioned in the various embodiments may be combined in any manner. This application is not limited to the specific embodiments disclosed in the text, but includes all technical solutions falling within the scope of the claims.

## Claims

1. A box body for accommodating a battery cell, wherein the box body comprises:
a lower box body, the lower box body comprising a box body steel layer and a box body aluminum layer; and
a temperature control assembly connected to the lower box body, the temperature control assembly comprising a temperature control aluminum layer, and the temperature control aluminum layer being welded to the box body aluminum layer.

2. The box body according to claim 1, wherein the lower box body comprises a bottom plate and an accommodating cavity formed on a side of the bottom plate, the bottom plate comprises a bottom plate steel layer and a bottom plate aluminum layer, and the bottom plate aluminum layer covers at least part of the bottom plate steel layer; and
the box body steel layer comprises the bottom plate steel layer, the box body aluminum layer comprises the bottom plate aluminum layer, and the temperature control aluminum layer is welded to the bottom plate aluminum layer.

3. The box body according to claim 2, wherein the temperature control assembly comprises a flow channel tube connected to the bottom plate aluminum layer, and a flow channel is formed inside the flow channel tube.

4. The box body according to claim 3, wherein the bottom plate aluminum layer is disposed on a side of the bottom plate steel layer facing the accommodating cavity, the bottom plate is recessed with a first groove in a direction away from the accommodating cavity, and at least part of the flow channel tube is accommodated in the first groove.

5. The box body according to claim 4, wherein a surface of the flow channel tube facing the accommodating cavity is flush with a surface of the bottom plate facing the accommodating cavity.

6. The box body according to claim 3, wherein the bottom plate aluminum layer is disposed on a side of the bottom plate steel layer away from the accommodating cavity.

7. The box body according to any one of claims 3 to 6, wherein the flow channel tube comprises a structural aluminum layer, the temperature control aluminum layer comprises the structural aluminum layer, and the structural aluminum layer is connected through brazing to the bottom plate aluminum layer.

8. The box body according to any one of claims 2 to 7, wherein the lower box body further comprises a side beam, and the bottom plate is connected to the side beam and encloses the accommodating cavity with the side beam.

9. The box body according to claim 8, wherein the side beam comprises a side beam steel layer, and the side beam steel layer is connected to the bottom plate steel layer.

10. The box body according to claim 9, wherein the bottom plate steel layer comprises a main body portion and an edge portion disposed on a peripheral side of the main body portion, the bottom plate aluminum layer covers the main body portion and exposes the edge portion, and the edge portion is connected to the side beam steel layer.

11. The box body according to claim 9, wherein the bottom plate steel layer comprises a main body portion and an edge portion disposed on a peripheral side of the main body portion, the edge portion is bent relative to the main body portion in a direction in which the bottom plate aluminum layer is located, and a side of the edge portion away from the bottom plate aluminum layer is connected to the side beam steel layer.

12. The box body according to claim 11, wherein the edge portion is perpendicular to the main body portion, or the edge portion is folded onto the main body portion.

13. The box body according to any one of claims 10 to 12, wherein the edge portion is welded to the side beam steel layer.

14. The box body according to any one of claims 9 to 13, wherein the side beam further comprises a side beam aluminum layer at least covering part of the side beam steel layer.

15. The box body according to any one of claims 2 to 14, wherein the lower box body further comprises a reinforcing beam, wherein the reinforcing beam is accommodated in the accommodating cavity, and the reinforcing beam is a steel beam; and
the bottom plate steel layer is connected to the reinforcing beam.

16. The box body according to any one of claims 2 to 15, wherein a thickness of the bottom plate steel layer is greater than a thickness of the bottom plate aluminum layer.

17. The box body according to claim 16, wherein the thickness of the bottom plate steel layer ranges from 0.5 mm to 2.0 mm, and the thickness of the bottom plate aluminum layer ranges from 0.05 mm to 1.0 mm.

18. The box body according to any one of claims 2 to 17, wherein a through hole is provided in the bottom plate, and the temperature control assembly covers the through hole.

19. The box body according to claim 18, wherein the bottom plate aluminum layer is disposed on a side of the bottom plate steel layer facing the accommodating cavity, and the temperature control assembly is disposed on a side of the bottom plate facing the accommodating cavity.

20. The box body according to claim 1, wherein the lower box body comprises a side beam, and the side beam comprises a side beam steel layer and a side beam aluminum layer at least covering part of the side beam steel layer; and
the box body steel layer comprises the side beam steel layer, the box body aluminum layer comprises the side beam aluminum layer, and the temperature control aluminum layer is welded to the side beam aluminum layer.

21. The box body according to claim 20, wherein the temperature control assembly comprises a first plate body and a second plate body, wherein a flow channel is formed between the first plate body and the second plate body, the first plate body comprises a first aluminum layer, the second plate body comprises a second aluminum layer, and the first aluminum layer is connected to the second aluminum layer; and
the temperature control aluminum layer comprises the first aluminum layer or the second aluminum layer, and the first aluminum layer or the second aluminum layer is welded to the side beam aluminum layer.

22. The box body according to claim 21, wherein the first plate body is recessed with a second groove in a direction away from the side beam, and the second plate body is disposed on a side of the first plate body facing the side beam and covers the second groove.

23. The box body according to claim 22, wherein a surface of the second plate body away from the first plate body is a flat surface.

24. The box body according to claim 22 or 23, wherein the first plate body further comprises a first steel layer, wherein the first steel layer is disposed on a side of the first aluminum layer away from the second aluminum layer; and/or
the second plate body further comprises a second steel layer, wherein the second steel layer is disposed on a side of the second aluminum layer away from the first aluminum layer.

25. A battery, comprising the box body according to any one of claims 1 to 24.

26. An electrical device, comprising the battery according to claim 25.
